(19) Europäisches Patentamt / European Patent Office / Office européen des brevets

(11) **EP 3 918 422 B1**

(12) **EUROPÄISCHE PATENTSCHRIFT**

(45) Veröffentlichungstag und Bekanntmachung des Hinweises auf die Patenterteilung:
**01.07.2026 Patentblatt 2026/27**

(21) Anmeldenummer: **20703428.1**

(22) Anmeldetag: **31.01.2020**

(51) Internationale Patentklassifikation (IPC):
*G03H 1/02* (2006.01)   *G03H 1/22* (2006.01)
*G02B 5/32* (2006.01)   *F21V 8/00* (2006.01)
*G02B 27/01* (2006.01)   *B60Q 1/00* (2006.01)
*B60R 1/12* (2006.01)   *G01S 17/00* (2020.01)
*B60Q 1/26* (2006.01)   *F21S 41/24* (2018.01)
*G02B 5/18* (2006.01)   *G03H 1/28* (2006.01)
*G03H 1/30* (2006.01)   *G03H 1/26* (2006.01)

(52) Gemeinsame Patentklassifikation (CPC):
**G03H 1/2205; B60Q 1/268; B60Q 3/217; G01S 7/481; G01S 17/04; G02B 6/34; G02B 6/4298; G02B 17/008; G02B 27/0103; G02B 27/4272; G03H 1/0248;** B60Q 3/64; G02B 21/06; G02B 2027/0107; G03H 1/0244;
(Forts.)

(86) Internationale Anmeldenummer:
**PCT/EP2020/052488**

(87) Internationale Veröffentlichungsnummer:
**WO 2020/157312 (06.08.2020 Gazette 2020/32)**

(54) **FUNKTIONALISIERTE SCHEIBE FÜR EIN FAHRZEUG**

FUNCTIONALISED DISK FOR A VEHICLE

VITRE FONCTIONNALISÉE CONÇUE POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.02.2019 DE 102019102610**

(43) Veröffentlichungstag der Anmeldung:
**08.12.2021 Patentblatt 2021/49**

(73) Patentinhaber: **Carl Zeiss Jena GmbH**
**07745 Jena (DE)**

(72) Erfinder:
• **KLEINDIENST, Roman**
 **07745 Jena (DE)**
• **ERLER, Christoph**
 **07745 Jena (DE)**
• **VOJTISEK, Petr**
 **07745 Jena (DE)**
• **JUNGHANS, Marc**
 **07745 Jena (DE)**
• **THOMAE, Daniel**
 **07745 Jena (DE)**
• **RIETHMÜLLER, Mirko**
 **07745 Jena (DE)**
• **BURKHARDT, Matthias**
 **07745 Jena (DE)**
• **GATTO, Alexandre**
 **07745 Jena (DE)**
• **LÜTZ, Andreas**
 **07745 Jena (DE)**

(74) Vertreter: **Patentanwälte Geyer, Fehners & Partner mbB**
**Perhamerstrasse 31**
**80687 München (DE)**

(56) Entgegenhaltungen:
WO-A1-2016/111707   WO-A2-2016/012813
JP-A- H0 668 379   JP-A- H0 712 938

(52) Gemeinsame Patentklassifikation (CPC): (Forts.)
G03H 1/28; G03H 1/30; G03H 2001/0212;
G03H 2001/0216; G03H 2001/221;
G03H 2001/2223; G03H 2001/2226;
G03H 2001/264; G03H 2001/266; G03H 2223/16;
G03H 2223/17; G03H 2223/23; G03H 2270/55

**Beschreibung**

Die vorliegende Erfindung betrifft eine funktionalisierte Scheibe für ein Fahrzeug mit den Merkmalen des Oberbegriffs des Anspruches 1.

Transparente Oberflächen aus Glas oder Kunststoff wie beispielsweise Fenster oder Windschutzscheiben in Autos weisen einen transparenten Basiskörper auf und dienen in der Regel lediglich dem Schutz von Personen oder Gegenständen vor Umwelteinflüssen wie Wind, Temperatur, Partikeln oder Strahlung.

Aus der JP H07 12938 A ist eine funktionalisierte Scheibe für ein Fahrzeug mit den Merkmalen des Oberbegriffs des Anspruches 1 bekannt. Die WO 2016/012813 A2 und die JP H06 68379 A beschreiben jeweils eine holografische Scheibe für ein Fahrzeug.

Es besteht zunehmend ein Interesse daran, einen solche Scheibe für ein Fahrzeug zur Verfügung zu stellen, die eine zusätzliche optische Funktionalität bereitstellt.

Es ist daher Aufgabe der Erfindung, eine Scheibe für ein Fahrzeug mit einer zusätzlichen optischen Funktionalität bereitzustellen.

Die Erfindung ist in den unabhängigen Ansprüchen definiert. Vorteilhafte Ausgestaltungen sind in den abhängigen Ansprüchen angegeben.

Bei der erfindungsgemäßen funktionalisierten Scheibe für ein Fahrzeug ist im transparenten Basiskörper ein teiltransparenter Einkoppelbereich und ein davon in einer ersten Richtung beabstandeter Auskoppelbereich vorgesehen bzw. ausgebildet. Die funktionalisierte Scheibe wird nachfolgend auch funktionalisierter Wellenleiter genannt.

Der teiltransparente Einkoppelbereich weist eine diffraktive Struktur auf, mit der die Transparenz des Einkoppelbereiches bei normaler Durchsicht in einem großen Winkel- und Wellenlängenbereich erhalten bleibt. Es kann somit von der auf eine Vorderseite des transparenten Basiskörpers treffenden Strahlung mittels des transparenten Einkoppelbereiches nur ein Teil so umgelenkt werden, dass der umgelenkte Teil als eingekoppelte Strahlung in den Basiskörper durch Reflexion bis zum Auskoppelbereich propagiert und auf den Auskoppelbereich trifft.

Die Transparenz des Einkoppelbereiches ist dabei von der Effizienz der Strahlungseinkopplung abhängig. Mit steigender Einkopplungseffizienz sinkt auch die Transparenz im Einkoppelbereich des funktionalisierten Wellenleiters im Einkoppelbereich. Im Sinne einer größtmöglichen Transparenz kann die Strahlungseinkopplung durch z.B. die diffraktive Struktur (insbesondere das mindestens eine Volumenhologramm) gerade so effizient sein, dass eine ausreichende Strahlungsleistung auf den Auskoppelbereich trifft. Der teiltransparente Einkoppelbereich kann so ausgebildet sein, dass die Einkoppeleffizienz z.B. 2%, 5%, 10%, 15%, 20%, 25%, 30%, 35%, 40%, 45% oder 50% beträgt. Insbesondere kann die Einkoppeleffizienz im Bereich von 2% - 50% liegen, so dass die Transparenz des Einkoppelbereiches im Bereich von 50% - 98% liegt. Auch der bzw. die Einkoppelbereiche der weiteren Ausführungsbeispiele können solche Einkoppeleffizienzen bzw. solche transmissive Eigenschaften aufweisen.

Der transparente Einkoppelbereich ist bevorzugt so ausgebildet, dass die Umlenkung des umgelenkten Teils der auf die Vorderseite des transparenten Basiskörpers treffenden Strahlung als reine Umlenkung erfolgt, die frei von einer abbildenden optischen Funktion (z.B. frei von einer fokussierenden Wirkung) ist.

Die Reflexionen können insbesondere interne Totalreflexionen an der Vorder- und/oder Rückseite des transparenten Basiskörpers sein. Es ist jedoch auch möglich, dass reflektive Schichten bzw. Beschichtungen oder teilreflektive Schichten oder Beschichtungen dafür vorgesehen sind.

Die Vorder- und Rückseite des teiltransparenten Körpers können als plane Flächen ausgebildet sein. So kann der teiltransparente Basiskörper beispielsweise als planparallele Platte ausgebildet sein.

Es ist jedoch auch möglich, dass die Vorderseite und/oder die Rückseite gekrümmt ausgebildet sind.

Der teiltransparente Basiskörper kann aus Glas und/oder Kunststoff bestehen. Er kann einstückig sein oder einen mehrschichtigen Aufbau aufweisen.

Insbesondere kann der transparente Basiskörper für Strahlung bzw. Licht aus dem sichtbaren Wellenlängenbereich transparent sein. Ferner kann eine Transparenz für das nahe Infrarot und/oder den Infrarotbereich vorliegen.

Der Auskoppelbereich des transparenten Basiskörpers kann von der auf ihn treffenden eingekoppelten Strahlung mindestens einen Teil so umlenken, dass der umgelenkte Teil aus dem Basiskörper austritt. Bevorzugt erfolgt dies über die Vorderseite oder Rückseite des transparenten Basiskörpers.

Der Auskoppelbereich kann teiltransparent ausgebildet sein. Insbesondere kann die Auskoppeleffizienz des Auskoppelbereiches z.B. 2%, 5%, 10%, 15%, 20%, 25%, 30%, 35%, 40%, 45% oder 50% betragen. Insbesondere kann die Auskoppeleffizienz des Auskoppelbereiches im Bereich von 2% - 50% liegen, so dass die Transparenz des Auskoppelbereiches im Bereich von 50% - 98% liegt. Auch der bzw. die Auskoppelbereiche der weiteren Ausführungsbeispiele können solche Auskoppeleffizienzen bzw. solche transmissive Eigenschaften aufweisen.

Die teiltransparente Ausbildung ist beispielsweise vorteilhaft, wenn der Einkoppelbereich und der Auskoppelbereich als diffraktive Strukturen (z.B. als Volumenhologramme) ausgebildet sind. Dann können der Einkoppelbereich und der Auskoppelbereich z.B. in einer Folie ausgebildet sein, was aus fertigungstechnischer Sicht vorteilhaft ist.

Es ist jedoch auch möglich, dass der Auskoppelbereich eine maximale Auskoppeleffizienz aufweist. Dies kann beispielweise durch eine Verspiegelung (bevorzug vollständige Verspiegelung) realisiert sein Der Einkoppelbereich und der Auskoppelbereich können so ausgebildet sein, dass sie neben der Umlenkung keine optische abbildende Funktion bewirken. Es ist jedoch auch möglich, dass der Einkoppelbereich und/oder der Auskoppelbereich zusätzlich zur Umlenkung eine optische Abbildungsfunktion bereitstellen und somit eine optische Abbildung bewirken. So kann die optische Abbildungsfunktion beispielsweise die Funktion einer Sammellinse oder Zerstreuungslinse, eines konkaven oder konvexen Spiegels, wobei die gekrümmten Flächen (zentriert oder dezentriert) sphärisch gekrümmt oder asphärisch gekrümmte Flächen sein können, verwirklichen.

Die diffraktive Struktur des Einkoppelbereiches kann als vergrabene diffraktive Struktur, als diffraktive Struktur zwischen zwei Substraten oder als auf der Vorder- oder Rückseite ausgebildete diffraktive Struktur verwirklicht sein.

Ferner kann der Auskoppelbereich eine diffraktive Struktur aufweisen. Die diffraktive Struktur des Auskoppelbereiches kann als vergrabene diffraktive Struktur oder als diffraktive Struktur auf der Vorderseite oder Rückseite ausgebildet sein.

Als diffraktive Struktur des Einkoppelbereiches bzw. des Auskoppelbereiches kann ein reflektives oder transmissives Volumenhologramm vorgesehen sein. Ferner ist es möglich, dass die diffraktive Struktur des Auskoppel- bzw. Einkoppelbereiches ein transmissives oder reflektives Reliefgitter ist.

Der Auskoppelbereich kann ferner eine Spiegelfläche, ein Prisma und/oder eine reflektive oder transmissive Fresnel-Struktur aufweisen. Diese Varianten können alternativ zur diffraktiven Struktur oder zusätzlich zur diffraktiven Struktur des Auskoppelbereiches vorgesehen sein.

Ferner wird ein Detektorsystem mit einer erfindungsgemäßen funktionalisierten Scheibe (einschließlich aller Weiterbildungen) bereitgestellt. Das Detektorsystem, das nachfolgend auch Detektionssystem genannt wird, kann einen Detektor aufweisen, auf den der vom Auskoppelbereich umgelenkte Teil der Strahlung trifft. Der Detektor kann mit der Vorder- oder der Rückseite des Basiskörpers verbunden sein. Insbesondere kann eine direkte Verbindung vorliegen. Der Detektor kann ein digitaler Bildsensor (z.B. ein CCD-Sensor oder ein CMOS-Sensor), eine Detektorarray oder z.B. eine Solarzelle sein.

Ferner kann das Detektorsystem so ausgebildet sein, dass im Bereich zwischen dem Detektor und der Vorder- bzw. Rückseite mindestens ein optisch abbildendes Element angeordnet ist. Das mindestens eine optisch abbildende Element kann z.B. als Objektiv, als refraktives Objektiv oder als refraktives Kameraobjektiv ausgebildet sein. Es ist auch möglich, dass der Bereich zwischen dem Detektor und der Vorder- bzw. Rückseite frei von abbildenden optischen Elementen ist. In anderen Worten trifft somit die vom Auskoppelbereich ausgekoppelte Strahlung auf den Detektor, ohne durch weitere optisch abbildende Elemente gelaufen zu sein. In diesem Fall ist es vorteilhaft, wenn der Auskoppelbereich zusätzlich zur Umlenkung eine optisch abbildende Eigenschaft aufweist.

Der funktionalisierte Wellenleiter kann so ausgebildet sein, dass er eine unendlich-unendlich-Abbildung durchführt. Es ist jedoch auch möglich, dass er eine endlich-unendlich-Abbildung, eine unendlich-endlich-Abbildung oder eine endlich-endlich-Abbildung durchführt.

Das Detektorsystem kann natürlich auch so ausgebildet sein, dass zwischen dem Detektor und der Vorder- bzw. Rückseite noch mindestens ein optisch abbildendes Element angeordnet ist. Das mindestens eine optisch abbildende Element dient insbesondere zur Führung des vom Auskoppelbereich umgelenkten Teils der Strahlung und kann z.B. als Linse ausgebildet sein. Das mindestens eine optisch abbildende Element kann z.B. als Objektiv, als refraktives Objektiv oder als refraktives Kameraobjektiv ausgebildet sein.

Bei dem funktionalisierten Wellenleiter ist die Breite des Einkoppelbereiches in einer zweiten Richtung quer zur ersten Richtung größer als die Breite des Auskoppelbereiches in der zweiten Richtung. Unter Ausdehnung bzw. Breite des Einkoppelbereiches wird hier insbesondere die bestimmungsgemäß effektiv genutzte Ausdehnung oder die optisch genutzte Ausdehnung verstanden. Dies ist beispielsweise die Ausdehnung des Abschnitts des Einkoppelbereiches, von dem die umgelenkte Strahlung auf das Detektorsystem trifft. Unter Ausdehnung bzw. Breite des Auskoppelbereiches wird hier insbesondere die bestimmungsgemäß effektiv genutzte Ausdehnung oder die optisch genutzte Ausdehnung verstanden. Dies ist beispielsweise die Ausdehnung des Abschnitts des Auskoppelbereiches, von dem die umgelenkte Strahlung auf das Detektorsystem trifft.

Ferner können der Einkoppelbereich und der Auskoppelbereich in der zweiten Richtung zueinander zentriert angeordnet sein.

Es ist jedoch auch möglich, dass der Einkoppelbereich und der Auskoppelbereich in der zweiten Richtung zueinander dezentriert angeordnet sind.

Es können mehrere Auskoppelbereiche vorgesehen sein, die in der zweiten Richtung nebeneinander angeordnet sind. Mindestens einer der Auskoppelbereiche kann zusätzlich die Funktion der Ablenkung quer zur ersten Richtung aufweisen.

Es kann eine Abstimmung des Sichtfeldes (nachfolgend "Field of View" oder "FoV" genannt) des funktionalisierten Wellenleiters an das FoV des Detektors (bzw. des Detektors mit dem mindestens einen optisch abbildenden Element, z.B. ein Objektiv) durchgeführt sein. Dies kann insbesondere durch eine Anpassung des Abstandes des Einkoppelbereiches und des Auskoppelbereiches entlang der ersten Richtung und der Ausdehnung des Einkoppelbereiches quer zur ersten Richtung und der Ausdehnung des Auskoppelbereiches quer zur ersten Richtung durchgeführt werden. Eine Anpassung des FoV des Detektors (bzw. des Detektors mit dem mindestens einen optisch abbildenden Element) an das FoV des funktionalisierten Wellenleiters kann durch eine Anpassung der Objektivbrennweite und / oder der Größe des Detektors erfolgen. Bevorzugt entspricht das FoV des funktionalisierten Wellenleiters dem FoV des Detektors (bzw. des Detektors mit dem mindestens einen optisch abbildenden Element). Dies kann durch eine gezielte Einstellung des FoV des funktionalisierten Wellenleiters und/oder eine gezielte Einstellung des FoV des Detektors (bzw. des Detektors mit dem mindestens einen optisch abbildenden Element) erfolgen.

Bei dem funktionalisierten Wellenleiter kann der Einkoppelbereich mindestens zwei Volumenhologramme umfassen, die jeweils von einem zu detektierenden Objekt kommenden und auf die Vorderseite treffenden Strahlung nur einen Teil so umlenken, dass der umgelenkte Teil als eingekoppelte Strahlung im Basiskörper durch Reflexion bis zum Auskoppelbereich propagiert und auf den Auskoppelbereich trifft. Die Volumenhologramme des Einkoppelbereiches können sich dadurch unterscheiden, dass ihre Umlenkfunktion unterschiedliche spektrale Winkeleigenschaften aufweist. Dadurch können bei gleichem Einfallswinkel unterschiedliche Wellenlängen umgelenkt werden. Der Auskoppelbereich lenkt von der auf ihn treffenden eingekoppelten Strahlung mindestens einen Teil so um, dass der umgelenkte Teil aus dem Basiskörper austritt (bevorzugt über die Vorder- oder Rückseite), um auf das Detektorsystem zu treffen.

Mit einem solchen Wellenleiter können mehr Farben übertragen werden, da die Volumenhologramme des Einkoppelbereiches unterschiedliche spektrale Winkeleigenschaften aufweisen und somit bei gleichen Einfallswinkeln unterschiedliche Wellenlängen so umlenken, dass sie Teil der eingekoppelten Strahlung im Basiskörper sind.

Die Volumenhologramme des Einkoppelbereiches können benachbart (mit oder ohne Abstand voneinander) angeordnet sein, insbesondere können sie in der ersten Richtung benachbart angeordnet sein. Es ist jedoch auch möglich, dass die Volumenhologramme des Einkoppelbereiches aufeinander bzw. übereinander (also bevorzugt in einer Stapelrichtung, die quer zur ersten Richtung und quer zur zweiten Richtung ist) angeordnet sind, so dass quasi ein Schichtstapel von Volumenhologrammen vorliegt. Alternativ oder zusätzlich können die Funktionen einiger oder aller Volumenhologramme des Einkoppelbereiches in ein einziges Volumenhologramm implementiert sein. Eine solche Implementierung wird auch Multiplexing genannt. Diese möglichen Ausgestaltungen des Einkoppelbereiches können bei allen beschriebenen Ausführungsbeispielen vorgesehen werden.

Der Auskoppelbereich kann für jedes Volumenhologramm des Einkoppelbereiches ein zugeordnetes Volumenhologramm aufweisen, das die gleiche spektrale Winkeleigenschaft bei der Umlenkung bereitstellt wie das entsprechende Volumenhologramm des Einkoppelbereiches. Damit kann die Dispersion der Volumenhologramme des Einkoppelbereiches kompensiert werden.

Die Volumenhologramme des Auskoppelbereiches können benachbart (mit oder ohne Abstand voneinander) angeordnet sein, insbesondere können sie in der ersten Richtung benachbart angeordnet sein. Es ist jedoch auch möglich, dass die Volumenhologramme des Auskoppelbereiches aufeinander bzw. übereinander (also bevorzugt in einer Stapelrichtung, die quer zur ersten Richtung und quer zur zweiten Richtung ist) angeordnet sind, so dass quasi ein Schichtstapel von Volumenhologrammen vorliegt. Alternativ oder zusätzlich können die Funktionen einiger oder aller Volumenhologramme des Auskoppelbereiches in ein einziges Volumenhologramm implementiert sein. Eine solche Implementierung wird auch Multiplexing genannt. Diese möglichen Ausgestaltungen des Auskoppelbereiches können bei allen beschriebenen Ausführungsbeispielen vorgesehen werden.

Die Volumenhologramme des Einkoppelbereiches können als reflektive oder transmissive Volumenhologramme ausgebildet sein. Gleiches gilt für die Volumenhologramme des Auskoppelbereiches.

Der Einkoppelbereich kann mindestens oder genau 2, 3, 4, 5, 6, 7, 8, 9, 10, bis zu 40, bis zu 50 oder bis zu 100 (oder jeder Wert zwischen1 und 100) Volumenhologramme aufweisen.

Bei dem funktionalisierten Wellenleiter kann der Einkoppelbereich mehrere diffraktive Einkoppelstrukturen aufweisen, die in der ersten Richtung benachbart sind und sich dadurch unterscheiden, dass sie unterschiedliche horizontale Sichtfelder in einer Ebene, die durch ein Lot auf die Vorderseite und einer zweiten Richtung quer zur ersten Richtung aufgespannt ist, aufweisen, so dass sie Strahlung aus den unterschiedlichen horizontalen Sichtfeldern zum Auskoppelbereich hin umlenken.

Damit kann ein größeres horizontales Sichtfeld aufgenommen und zu einem Detektor geleitet werden.

Die diffraktiven Einkoppelstrukturen können so ausgebildet sein, dass sie die Strahlung aus den unterschiedlichen horizontalen Sichtfeldern zum Auskoppelbereich hin umlenken.

Damit kann ein größeres horizontales Sichtfeld aufgenommen und zu einem Detektor geleitet werden.

Die diffraktiven Einkoppelstrukturen können so ausgebildet sein, dass sie die Strahlung aus den unterschiedlichen horizontalen Sichtfeldern bei der Umlenkung durch unterschiedliche umgelenkte Wellenlängen kodieren, so dass die Auskopplung und/oder Detektion selektiv für die verschiedenen horizontalen Sichtfelder möglich ist.

Der Auskoppelbereich kann für die diffraktive Einkoppelstruktur eine zugeordnete diffraktive Auskoppelstruktur aufweisen, die selektiv Strahlung mit Wellenlängen der zugeordneten diffraktiven Einkoppelstruktur umlenkt.

Die diffraktiven Auskoppelstrukturen können die Strahlung der zugeordneten Einkoppelstrukturen so umlenken, dass sie auf örtlich unterschiedliche Bereiche eines Detektorsystems treffen.

Es kann für mindestens einen örtlich unterschiedlichen Bereich des Detektors ein Farbfilter vorgesehen sein, der nur den entsprechenden Wellenlängenbereich zum Detektor leitet.

Die diffraktiven Einkoppelstrukturen können so ausgebildet sein, dass sie die Strahlung aus den unterschiedlichen Umlenkwinkelbereichen kodieren, so dass die Auskopplung und/oder Detektion selektiv für die verschiedenen horizontalen Sichtfelder möglich ist.

Der Einkoppelbereich kann vor jeder diffraktiven Einkoppelstruktur eine Abschattungsblende mit einer Lamellenstruktur aufweisen, die für jede diffraktive Einkoppelstruktur ein unterschiedliches vertikales Sichtfeld in einer Ebene festlegt, die durch ein Lot auf die Vorderseite und der ersten Richtung aufgespannt ist.

Der Auskoppelbereich kann für jede diffraktive Einkoppelstruktur eine zugeordnete diffraktive Auskoppelstruktur aufweisen, die selektiv Strahlung aus den unterschiedlichen Umlenkwinkelbereichen der zugeordneten diffraktiven Einkoppelstrukturen umlenkt. Die diffraktiven Auskoppelstrukturen können der ersten Richtung benachbart angeordnet sein.

Die diffraktiven Auskoppelstrukturen können jeweils als reflektives oder transmissives Volumenhologramm ausgebildet sein.

Der funktionalisierte Wellenleiter kann so ausgebildet oder weitergebildet sein, dass der Einkoppelbereich entlang der zweiten Richtung mindestens zwei unterschiedliche diffraktive Einkoppelstrukturen aufweist, die sich darin unterscheiden, dass sie eine unterschiedliche Umlenkungskomponente in der zweiten Richtung aufweisen.

Damit liegt eine höhere Effizienz hinsichtlich der Ausnutzung der eingekoppelten Strahlung vor.

Die Umlenkungskomponente in der zweiten Richtung kann für jede der diffraktiven Einkoppelstrukturen, die entlang der zweiten Richtung zum Auskoppelbereich versetzt sind, so gewählt sein, dass der vorliegende Versatz für die eingekoppelte Strahlung kompensiert wird.

Der Auskoppelbereich kann so ausgebildet sein, dass er die von den unterschiedlichen diffraktiven Einkoppelstrukturen eingekoppelte Strahlung in den gleichen Winkelbereich umlenkt.

Der funktionalisierte Wellenleiter für ein Detektorsystem kann so ausgebildet oder weitergebildet sein, dass der Einkoppelbereich ein Einkoppelreliefgitter umfasst und der Auskoppelbereich ein Auskoppelreliefgitter umfasst.

Insbesondere können das Einkoppelreliefgitter und das Auskoppelreliefgitter die gleiche Gitterperiode aufweisen.

Der Auskoppelbereich kann entlang der ersten Richtung näher am Rand des Basiskörpers angeordnet sein als der Einkoppelbereich.

Ferner kann der Einkoppelbereich an der Rückseite angeordnet sein.

Bei dem Fahrzeug kann es sich um ein Kraftfahrzeug, ein LKW, ein Fluggerät, ein motorisiertes oder nicht motorisiertes Fahrzeug oder um ein sonstiges Fahrzeug handeln. Die Scheibe kann eine beliebige Scheibe des Fahrzeugs sein, wie z.B. die Windschutzscheibe, eine Seitenscheibe oder eine Heckscheibe. Insbesondere können mehrere Scheiben (bzw. Detektorsysteme) für ein Fahrzeug bereitgestellt werden. Mit diesen können z.B. die Position einer Person oder eines Gegenstandes innerhalb des Fahrzeugs detektiert werden. Ferner wird ein Fahrzeug mit einer oder mehrerer solcher funktionalisierter Scheiben (oder mit einem oder mehreren Detektorsystemen) bereitgestellt.

Der Auskoppelbereich kann entlang der ersten Richtung näher am Rand des Basiskörpers angeordnet sein als der Einkoppelbereich.

Die so funktionalisierte Scheibe kann in einem Detektorsystem (bzw. Detektionssystem) eingesetzt sein, das in der beschriebenen Art und Weise aus- und weitergebildet sein kann. Insbesondere kann ein Detektor vorgesehen sein, auf den der vom Auskoppelbereich umgelenkte Teil der Strahlung trifft. Zwischen dem Auskoppelbereich und dem Detektor kann das Detektionssystem mindestens ein optisch abbildendes Element aufweisen. Das mindestens eine optisch abbildende Element kann z.B. als Objektiv, als refraktives Objektiv oder als refraktives Kameraobjektiv ausgebildet sein.

Der Basiskörper kann einen weiteren Einkoppelbereich und einen davon in der ersten Richtung beabstandeten weiteren Auskoppelbereich aufweisen, wobei der weitere Einkoppelbereich von der von einer Licht- oder Bildquelle kommenden und auf den weiteren Einkoppelbereich treffenden Strahlung mindestens einen Teil so umlenkt, dass der umgelenkte Teil als eingekoppelte weitere Strahlung im Basiskörper durch Reflexionen bis zum weiteren Auskoppelbereich propagiert und auf den weiteren Auskoppelbereich trifft. Der weitere Auskoppelbereich kann eine Struktur, z.B. eine diffraktive Struktur, umfassen, die die auf sie treffende eingekoppelte weitere Strahlung so umlenkt, dass der umgelenkte Teil aus dem Basisköper durch die Vorderseite oder Rückseite austritt, um die gewünscht Beleuchtung und/oder Projektion zu bewirken. Die diffraktive Struktur kann an die Wellenlängen der von der Licht- oder Bildquelle kommenden Strahlung so angepasst sein, dass möglichst viel Strahlung reflektiert wird. Dennoch kann die diffraktive Struktur noch die gewünschte Transparenz bei z.B. Hindurchblicken aufweisen. Ferner ist es möglich, dass die diffraktive Struktur nur einen Teil der Strahlung von der Licht- oder Bildquelle umlenkt.

Die Struktur des weiteren Auskoppelbereiches kann eine transmissive oder reflektive diffraktive Struktur, ein transmissives oder reflektives Volumenhologramm, eine Spiegelfläche, ein Prisma oder ein transmissives oder reflektives Reliefgitter sein.

Damit wird eine Scheibe bereitgestellt, die zwei zusätzliche optische Funktionalitäten aufweist.

Die eingekoppelte Strahlung und die eingekoppelte weitere Strahlung können beispielsweise mindestens abschnittsweise im selben Bereich im Basiskörper in entgegengesetzter Richtung propagieren. Es wird somit derselbe Übertragungskanal in unterschiedlicher Richtung genutzt.

Natürlich können die eingekoppelte Strahlung und die eingekoppelte weitere Strahlung auch vollständig in unterschiedlichen Bereichen im Basiskörper propagieren.

Der Einkoppelbereich und der weitere Auskoppelbereich können mindestens zum Teil im selben Bereich im Basiskörper ausgebildet sein. Sie können beispielsweise in einer integrierten Art und Weise zusammen ausgebildet sein, sie können übereinander gestapelt ausgebildet sein und/oder sie können sich teilweise überlappen.

Ferner ist es möglich, dass der Einkoppelbereich und der weitere Auskoppelbereich in unterschiedlichen Bereichen im Basiskörper ausgebildet sind.

Die beschriebenen unterschiedlichen Ausbildungen der funktionalisierten Scheibe können, soweit technisch sinnvoll, miteinander kombiniert werden. Es ist auch möglich, dass einzelne Merkmalsgruppen untereinander ausgetauscht werden.

Das erfindungsgemäße Detektionssystem kann als Kamera (z.B. Digitalkamera oder Videokamera) ausgebildet sein.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

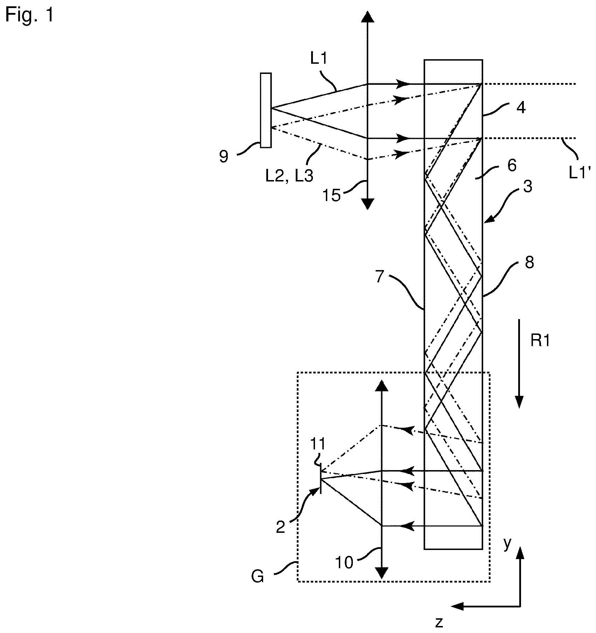

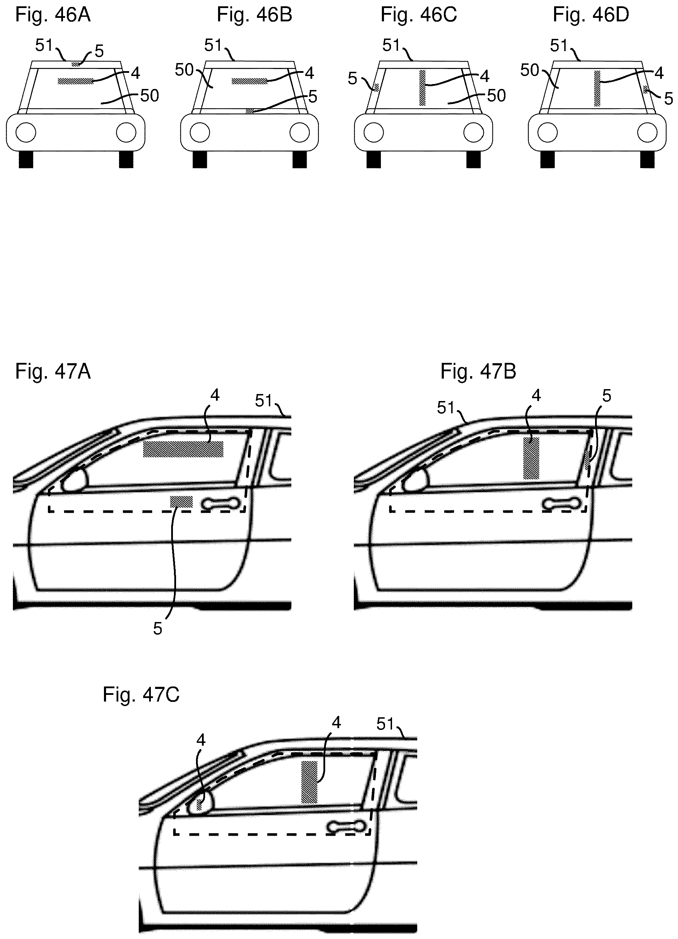

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Ausführungsbeispiele der erfindungsgemäßen funktionalisierten Scheibe für ein Fahrzeug sowie eines erfindungsgemäßen Detektorsystem mit einer funktionalisierten Scheibe sind in Figuren 46A - 47C gezeigt und anhand dieser Figuren beschrieben. Die in Figuren 1 - 45 beschriebenen Ausführungsbeispiele dienen zum besseren Verständnis der der erfindungsgemäßen funktionalisierten Scheibe für ein Fahrzeug sowie eines erfindungsgemäßen Detektorsystem mit einer funktionalisierten Scheibe. Von den Figuren zeigen:

Fig. 1 — eine Seitenansicht einer Ausführungsform eines Detektorsystems;

Fig. 2 — eine Draufsicht des Wellenleiters 1 von Fig. 1;

Fig. 3 — eine Ansicht von oben auf den Wellenleiter 1;

Fig. 4 — eine schematische Darstellung der spektral aufgelösten, winkelabhängigen Ablenkeffizienz des reflektiven Volumenhologramms des Einkoppelbereiches 4;

Fig. 5 — eine schematische Darstellung der Ablenkeffizienz für drei unterschiedliche Einfallswinkel in Abhängigkeit der Wellenlänge;

Fig. 6 — eine vergrößerte Ausschnittsdarstellung einer Seitenansicht zur Erläuterung der durch die Detektorpixel bewirkten Mittelung über einen definierten Winkelbereich;

Fig. 7A-7C — Draufsichten auf den Wellenleiter zur Erläuterung unterschiedlicher Breitenverhältnisse zwischen Einkoppel- und Auskoppelbereich;

Fig. 7D — eine Ansicht von oben zur Erläuterung der möglichen Einschränkung des horizontalen Sichtfeldes bei einem Detektorsystem 2 mit Objektiv 1;

Fig.8A und 8B — weitere Ausführungsbeispiele des Wellenleiters 1;

Fig. 8C — eine vergrößerte Seitenansicht des Bereiches des Auskopplung des Wellenleiters 1 zur Erläuterung einer möglichen Reduzierung des vertikalen Sichtfeldes;

Fig. 9A und 9B — Darstellung zur Erläuterung der Herstellung eines Volumenhologramms für den Einkoppelbereich;

Fig. 10 — eine Draufsicht auf den Wellenleiter gemäß eines weiteren Ausführungsbeispiels;

Fig. 11A-F — Seitenansichten des Einkoppelbereiches des Wellenleiters von Fig. 10;

Fig. 12 — eine schematische Darstellung der spektral aufgelösten, winkelabhängigen Ablenkeffizienz des Einkoppelbereiches gemäß Fig. 10;

Fig. 13A-13C    zeigt schematisch die Ablenkeffizienz verschiedener Einfallswinkel
in Abhängigkeit der Wellenlänge;

Fig. 14A-F    schematische Seitenansichten zur
Erläuterung des Auskoppelbereiches
des Wellenleiters gemäß Fig. 10;

Fig. 15    schematische Darstellung der spektral aufgelösten, winkelabhängigen
Ablenkeffizienz für den Einkoppelbereich eines Wellenleiters mit für 40
unterschiedliche Volumenhologramme;

Fig. 16    eine Draufsicht eines Wellenleiters
gemäß eines weiteren Ausführungsbeispiels;

Fig. 17    eine Ansicht von oben des Wellenleiters von Fig. 16;

Fig. 18A, 18B    Seitenansichten des Einkoppelbereiches zur Erläuterung der Funktionsweise des Wellenleiters gemäß Figuren 16 und 17;

Fig. 19A-19C    zeigt schematisch die Einfallswinkel -
und spektral abhängige Effizienz der
lateral zueinander versetzten Einkoppelvolumenhologramme des Wellenleiters gemäß Fig. 16;

Fig. 20    zeigt schematisch das spektrale winkelabhängige Spektrum der Auskoppelhologramme der Ausführungsform gemäß Fig. 16 inklusive spektrale Filterung;

Fig. 21 und 22    Draufsichten auf zwei unterschiedliche Wellenleiter 1 zur Erläuterung eines weiteren Ausführungsbeispiels;

Fig. 23    eine Seitenansicht einer weiteren
Ausführungsform des Wellenleiters;

Fig. 24    eine schematische Darstellung des
geometrischen Übertragungsspektrums des Wellenleiters gemäß Fig.
23;

Fig. 25    eine vergrößerte Seitenansicht des
Auskoppelbereiches des Wellenleiters von Fig. 23;

Fig. 26    eine schematische Darstellung des
geometrischen Übertragungsspektrums bei einer Vignettierung durch
die Eintrittspupille des Detektorsystems;

Fig. 27    zeigt schematisch einen simulierten
Querschnitt durch eine Gitterperiode
des vergrabenen Einkoppelgitters
des Wellenleiters gemäß Fig. 23;

Fig. 28    zeigt schematisch die Beugungseffizienz des Reliefgitters in Abhängigkeit der Wellenlänge;

Fig. 29    zeigt die Draufsicht eines weiteren Ausführungsbeispiels;

Fig. 30    zeigt eine Seitenansicht des Ausführungsbeispiels von Fig. 29;

Fig. 31    zeigt ein weiteres Ausführungsbeispiel;

Fig. 32    zeigt die Seitenansicht zu Fig. 31;

Fig. 33    zeigt eine schematische Darstellung
für ein optisches System;

Fig. 34    zeigt das optische System gemäß

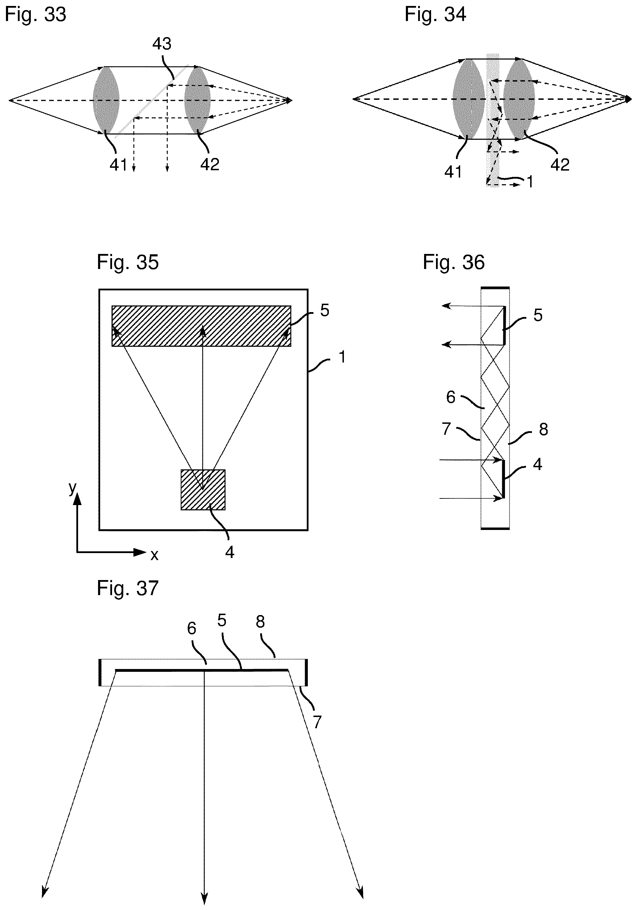

Fig. 33 mit einem Wellenleiter;

Fig. 35    zeigt ein weiteres Ausführungsbeispiel des Wellenleiters, das insbesondere zur Projektion und/oder Beleuchtung verwendet werden kann;

Fig. 36    zeigt die Seitenansicht des Wellenleiters von Fig. 35;

Fig. 37    zeigt die Ansicht von oben des Wellenleiters von Fig. 35.

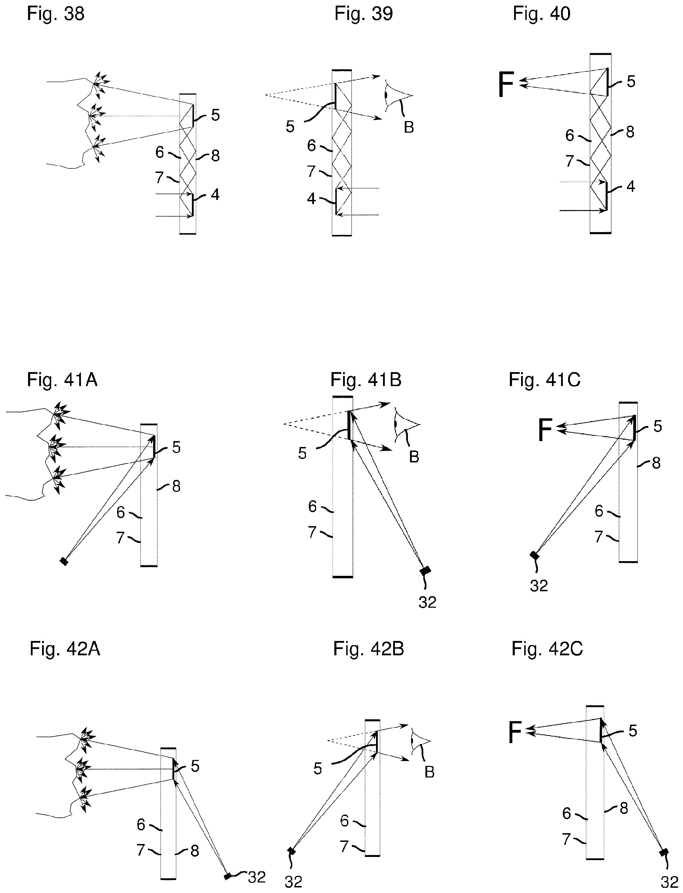

Fig. 38-40    zeigen schematisch die Beleuchtung
bzw. Projektion mit einem Wellenleiter;

Fig. 41A-41C    zeigen die Beleuchtung bzw. Projektion, bei der ein Freistrahlengang von
der Licht-/Beleuchtungsquelle bis
zum Auskoppelbereich vorliegt, wobei der Auskopppelbereich reflektiv
genutzt wird;

Fig. 42A-42C    zeigt die entsprechende Anordnung
gemäß Fig.41A-41C, wenn der Auskoppelbereich transmissiv genutzt
wird;

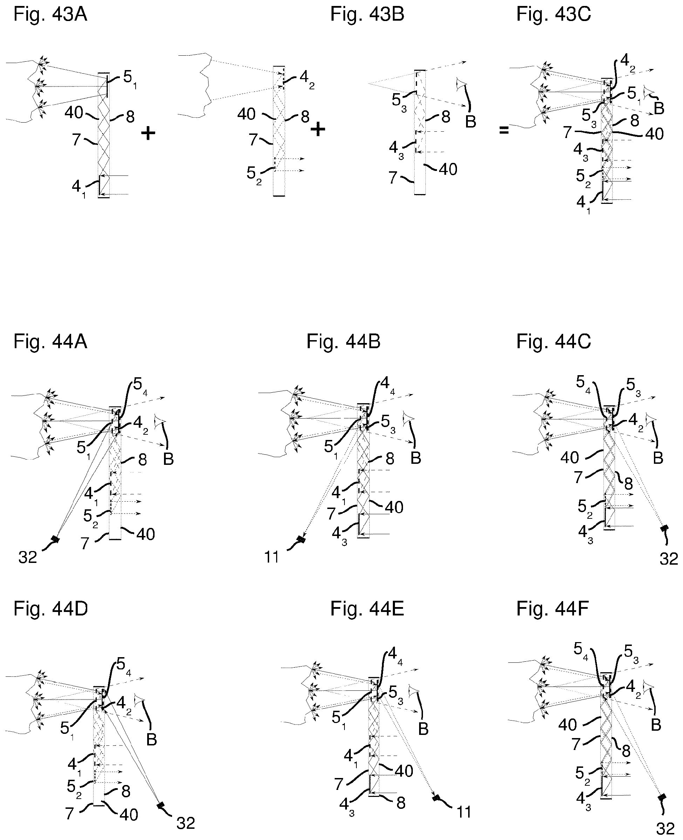

Fig. 43A-43C    zeigt eine Variante der Kombination
der Detektion mit der Projektion
bzw. Beleuchtung;

Fig. 44A-44C    zeigt eine weitere Variante der Kombination der Detektion mit der Projektion bzw. Beleuchtung;

Fig. 44D-44F    zeigt eine weitere Variante der Kombination der Detektion mit der Beleuchtung bzw. Projektion;

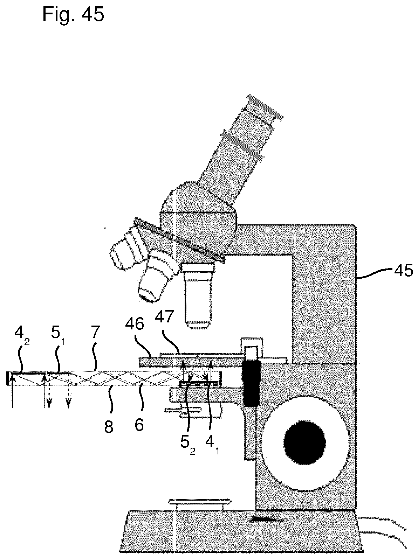

Fig. 45    zeigt ein Ausführungsbeispiel, bei
dem der Wellenleiter in einem Mikroskop genutzt wird;

Fig. 46-46D    zeigt Ausführungsbeispiele der Integration des Wellenleiters bzw. Ausbildung des Wellenleiters in einer Windschutzscheibe eines Fahrzeugs, und

Fig. 47A-47C    zeigt Varianten der Integration des erfindungsgemäßen Wellenleiters in einer Seitenscheibe eines PKWs.

Die Ansichten gemäß Fig. 1 bis 3 zeigen eine Ausführungsform des Wellenleiters 1 zusammen mit einem Detektorsystem 2, um eine Kamera 3 zu realisieren.

Der Wellenleiter 1 umfasst dazu einen Einkoppelbereich 4 sowie einen davon beabstandeten Auskoppelbereich 5 und kann, wie in Fig. 1 bis 3 gezeigt ist, auf einer planparallelen Platte 6 mit einer planen Vorderseite 7 und einer planen Rückseite 8 ausgebildet sein. Die planparallele Platte 6, die auch als Basiskörper 6 bezeichnet werden kann, ist aus einem transparenten Material, wie z. B. Glas oder Kunststoff, gebildet.

Das Detektorsystem 2 und der untere Teil der Platte 6 mit dem Auskoppelbereich 5 können in einem nur in Fig. 1 schematisch dargestellten Gehäuse G angeordnet sein, so dass für einen Benutzer auf den ersten Blick nicht erkennbar ist, dass es sich um eine Kamera 3 handelt.

Mit der Kamera 3 kann ein Objekt 9 in der Art und Weise abgebildet werden, dass vom Objekt 9 ausgehende Lichtbündel L1, L2, L3 über die Vorderseite 7 in die Platte 6 eintreten und vom Einkoppelbereich 4 so umgelenkt werden, dass sie unter einem solchen Winkel auf die Vorderseite 7 treffen, dass interne Totalreflexion stattfindet. Somit werden die Lichtbündel L1, L2 und L3 durch interne Totalreflexion an der Vorderseite 7 und Rückseite 8 bis zum Auskoppelbereich 5 geführt, der eine Umlenkung in Richtung zur Vorderseite 7 bewirkt, so dass die Lichtbündel L1 - L3 über die Vorderseite 7 aus der Platte austreten. Die Lichtbündel L1 - L3 propagieren somit im Wellenleiter 1 entlang einer ersten Richtung R1 (hier y-Richtung) vom Einkoppel- zum Auskoppelbereich 4, 5.

Mittels eines Objektives 10 des Detektorsystems 2 werden die Lichtbündel L1 - L3 dann auf einen Detektor 11 des Detektorsystems 2 fokussiert, so dass mittels des Detektors 11 das gewünschte Bild des Objektes 9 aufgenommen werden kann.

Der Einkoppelbereich 4 ist als reflektives Volumenhologramm ausgebildet, das eine einfallswinkelabhängige Wellenlängenselektivität aufweist, so dass es für einen großen Winkel- und Wellenlängenbereich eine hohe Transparenz besitzt (wie durch das transmittierte Lichtbündel L1' in Fig. 1 angedeutet ist; andere transmittierte Lichtbündel sind zur Vereinfachung der Darstellung nicht eingezeichnet). Das bedeutet, dass nur ein Teil der vom Objekt 9 ausgehenden und auf den Einkoppelbereich 4 treffenden Lichtbündel L1 - L3 in der beschriebenen Art und Weise umgelenkt werden. Andere Lichtbündel vom Objekt 9 propagieren durch den Einkoppelbereich 4 und treten über die Rückseite 8 aus der Platte 6 aus. Somit kann der Einkoppelbereich 4 als teiltransparent bezeichnet werden.

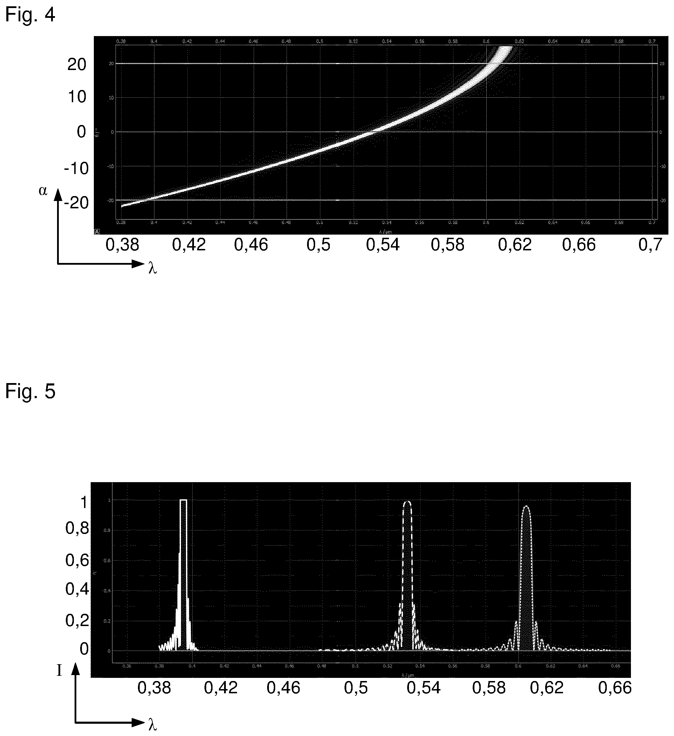

In Fig. 4 ist schematisch die spektral aufgelöste, winkelabhängige Ablenkeffizienz für das reflektive Volumenhologramm des Einkoppelbereiches 4 in Abhängigkeit des Einfallswinkels des entsprechenden Lichtbündels dargestellt, wobei entlang der x-Achse die Wellenlänge in $\mu$m und entlang der y-Achse der Einfallswinkel in ° aufgetragen ist. In Fig. 5 ist die Ablenkeffizienz für die Einfallswinkel + 20°, 0° und - 20° dargestellt, wobei die Wellenlänge in nm entlang der x-Achse und die Effizienz entlang der y-Achse aufgetragen ist.

Aus Fig. 4 und 5 kann entnommen werden, dass das reflektive Volumenhologramm des Einkoppelbereiches 4 für einen Einfallswinkel von - 20° Strahlung aus dem Spektralbereich von 392 nm bis 398 nm ($\lambda_{zentral}$ = 395 nm $\pm$ 3 nm) mit hoher Effizienz ablenkt und somit in die planparallele Platte 6 einkoppelt. Für Einfallswinkel von 0° liegt die hohe Effizienz für den Spektralbereich von 528 nm bis 536 nm ($\lambda_{zentral}$ = 532 nm $\pm$ 4 nm) vor und für den Einfallswinkel von + 20° liegt eine hohe Einkoppeleffizienz für den Spektralbereich von 600 nm bis 610 nm ($\lambda_{zentral}$ = 605 nm $\pm$ 5 nm).

Da der Wellenleiter 1 gemäß Fig. 1 bis 3 so ausgebildet ist, dass weder der Einkoppelbereich 4 noch der Auskoppelbereich 5 eine abbildende Funktion aufweist, liegt eine Unendlich-Unendlich-Konfiguration des Wellenleiters 1 vor. Man kann auch sagen, dass der Wellenleiter 1 eine Unendlich-Unendlich-Abbildung durchführt. Damit führt die spektrale und winkelabhängige Ablenkeffizienz des reflektiven Volumenhologramms des Einkoppelbereiches 4 dazu, dass jeder Feldwinkel (und somit jeder Punkt des abgebildeten Objektes 9) nach der Einkopplung mittels des Einkoppelbereiches 4 nur aus einem kleinen Spektralbereich, wie unter Bezugnahme auf Fig. 4 und 5 erläutert wurde, besteht. Dadurch ergibt sich eine spektral aufgelöste Winkelverteilung, die auf dem Detektor 11 letztendlich zu einem Bild mit spektralem Verlauf (bzw. mit Farbverlauf) führt. Die mittels des Auskoppelbereiches 5 ausgekoppelten Lichtbündel L1 - L3 werden somit mit einem Winkelspektrum ausgekoppelt, das mittels des Objektives 10 in eine Ortsverteilung auf dem Detektor 11 überführt wird. Der Detektor 11 kann z. B. ein CCD-Detektor oder ein CMOS-Detektor sein.

Da der Einkoppelbereich 4 das reflektive Volumenhologramm aufweist, führt die Einkopplung mittels des reflektiven Volumenhologramms zu einer Dispersion innerhalb des eingekoppelten Spektralbereiches für jeden Winkel. Wenn der Auskoppelbereich 5 ein in gleicher Weise ausgebildetes reflektives Volumenhologramm wie der Einkoppelbereich 4 aufweist, wird die durch den Einkoppelbereich 4 bedingte Dispersion kompensiert und alle spektralen Anteile werden wieder in den entsprechenden Winkel abgelenkt.

Alternativ zur beschriebenen Unendlich-Unendlich-Konfiguration des Wellenleiters 1 kann der Einkoppelbereich 4 und/oder der Auskoppelbereich 5 z. B. eine abbildende Funktion in Form einer Linsenfunktion oder Hohlspiegelfunktion aufweisen. Dadurch können Endlich-Unendlich-, Unendlich-Endlich- oder Endlich-Endlich-Abbildungskonfigurationen mittels des Wellenleiters 1 realisiert werden. Bei dem Einkoppelbereich 4 kann dies beispielsweise dazu genutzt werden, um ein Objekt 9 aufzunehmen, das so nah an dem Wellenleiter 1 positioniert ist, das optisch nicht mehr von einem unendlich weit entfernten Objekt ausgegangen werden kann. Beim Auskoppelbereich 5 ermöglicht eine Implementierung einer solchen Linsen- oder Hohlspiegelfunktion, das ausgekoppelte Winkelspektrum gleich in eine Ortsverteilung in der Brennebene dieser implementierten Linsen- oder Spiegelfunktion zu überführen. In diesem Fall kann das Objektiv 9 z. B. weggelassen werden. In diesem Fall kann man sagen, dass das Detektorsystem 2 den Detektor 11 sowie die Linsen- und/oder Hohlspiegelfunktion des Auskoppelbereiches 5 aufweist. Da das Objektiv 10 entfallen kann, kann der Detektor 11 beispielsweise direkt auf der Vorderseite 7 des Wellenleiters 1 positioniert und/oder befestigt werden, wodurch ein sehr hoher Integrationsgrad, ein minimales Volumen und eine hohe Robustheit realisiert werden kann.

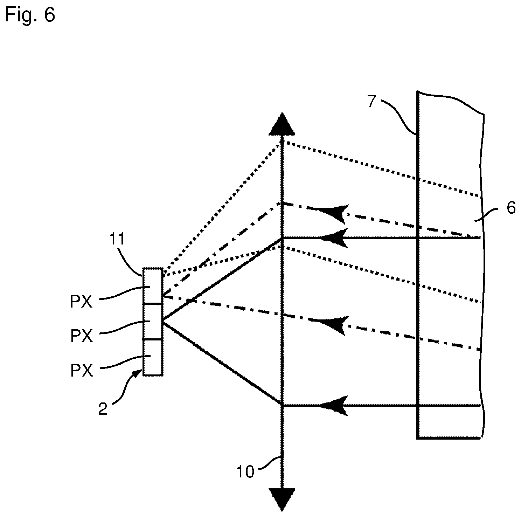

Wie bereits ausgeführt wurde, wird die nach der Auskopplung mittels des Auskoppelbereichs 5 spektral aufgelöste Winkelverteilung mit dem Objektiv 10 oder einer in den Auskoppelbereich 5 integrierten Abbildungsfunktion in eine Ortsverteilung auf dem Detektor 11 überführt. Ein solcher Detektor 11 weist eine Diskretisierung in Form von Pixeln auf. Gemäß der Darstellung in Fig. 6, in der das entfaltete Wellenleitersystem detektorseitig dargestellt ist, mittelt jedes Pixel PX dabei über einen definierten Winkelbereich, der durch die Pixelgröße PG, dessen Abstand von der optischen Achse $A_P$ und der Brennweite $F_{AK}$ des Objektives 10 bzw. der Abbildungsunktion des Auskoppelbereiches 5 gegeben ist.

Gemäß den Darstellungen in Fig. 4 und 5 ist mit der Aufnahme eines Winkelbereiches auch die Integration über einen Spektralbereich verbunden. Die spektrale Bandbreite ist dabei durch den von einem Pixel maximalen ($\alpha_2$, Fig. 4) und den minimalen aufgenommenen Winkel ($\alpha_1$, Fig. 4) gegeben, die wie folgt berechnet werden können:

$$\alpha_{1,n} = atan\left(\frac{PG \cdot 0{,}5 + (n-1) \cdot PG}{f}\right)$$

$$\alpha_{2,n} = atan\left(\frac{PG \cdot 0{,}5 + n \cdot PG}{f}\right)$$

wobei n die Nummer des jeweiligen Pixels (0 → auf opt. Achse, n < 0 → unterhalb der opt. Achse, n > 0 → oberhalb der opt. Achse), PG die Pixelgröße und f die Brennweite des optischen Systems bezeichnen.

Mit Hilfe dieser Grenzwinkel kann dann beispielsweise auf Basis von Kogelniks Coupled-Wave-Theory die Bandbreite berechnet werden, über die ein jedes Pixel integriert. Somit setzt sich das von einem Pixel detektierte Gesamtspektrum aus den Spektren innerhalb des detektierten Winkelbereiches zusammen, wodurch es zu den in Fig. 5 gezeigte Verbreiterungen in den dargestellten Spektren kommt. Für den Grenzfall, dass der Detektor 11 aus nur einem Pixel besteht, auf den alle Winkelbereiche übertragen werden, würde eine Bildinformation mit allen Spektralanteilen aufgenommen werden.

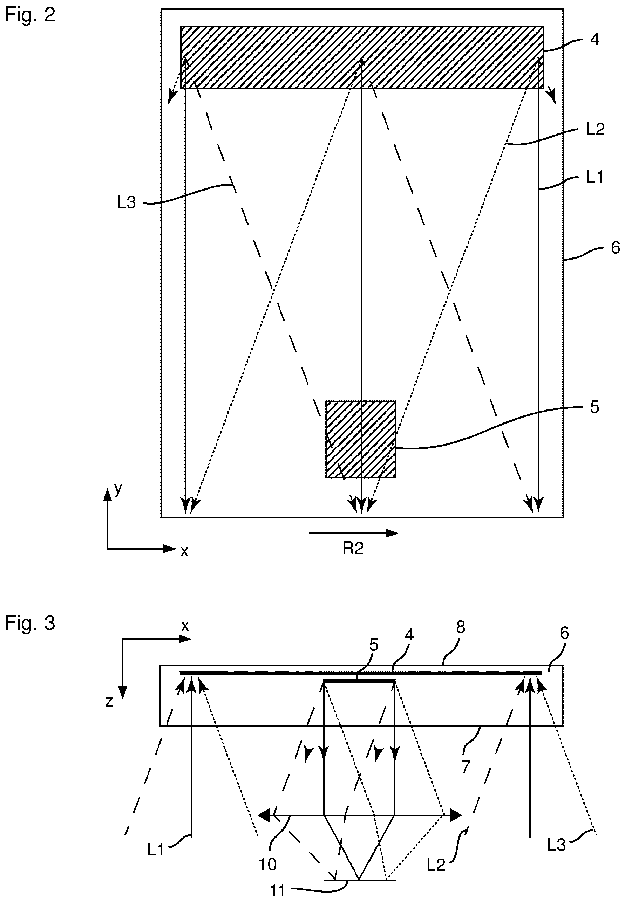

Während die Lage der Pupille (strahlbündelbegrenzende Blende bzw. Ort, an dem sich die Hauptstrahlen aller Feldwinkel schneiden) bei der Unendlich-Unendlich-Konfiguration des Wellenleiters 1 vom Verhältnis der Breite B1 (Ausdehnung quer zur ersten Richtung R1 entlang einer zweiten Richtung R2, die hier der x-Richtung entspricht) des Einkoppelbereiches 4 (Fig. 2) zur Breite B2 des Auskoppelbereiches 5 bestimmt wird, ist das Field of View (bzw. Sichtfeld) des Wellenleiters 1 in Richtung R2 zusätzlich vom Abstand D des Einkoppelbereiches 4 vom Auskoppelbereich 5 entlang der Ausbreitungsrichtung R1 bzw. der ersten Richtung R1 im Wellenleiter 1 abhängig.

Natürlich können die Dimensionen bzw. Abmessungen des Einkoppelbereiches 4 und des Auskoppelbereiches 5 durch Blenden eingeschränkt werden. Es wird hier stets von der optisch genutzten Abmessung bzw. optisch genutzten Breite ausgegangen. Diese werden nachfolgend auch als effektive Breiten bezeichnet.

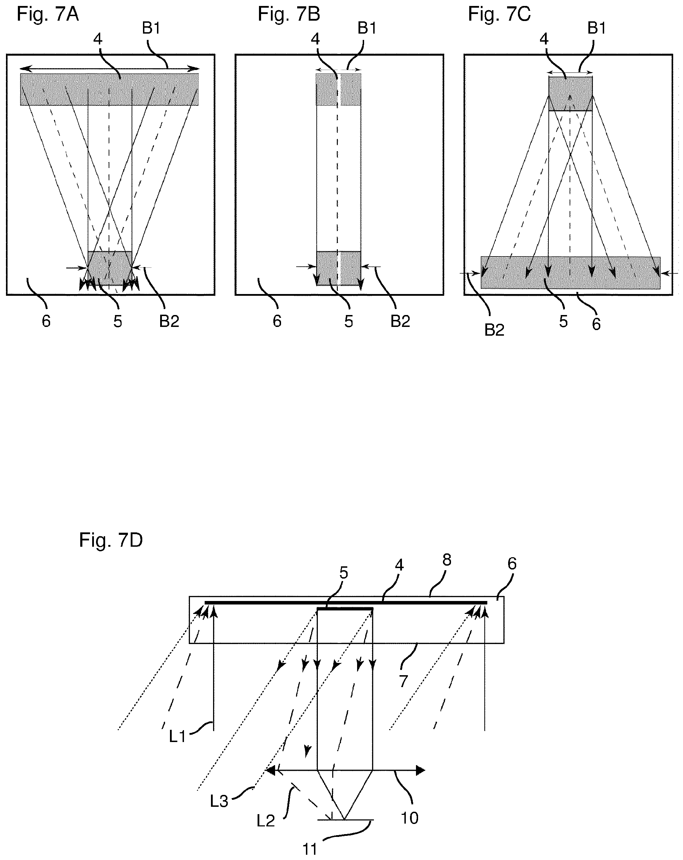

In den Fig. 7A, 7B und 7C sind drei grundsätzlich unterschiedliche Breitenverhältnisse von Einkoppel- zu Auskoppelbereich 4, 5 dargestellt. Bei der Analyse der Pupillenlage werden nur nicht-vignettierte Feldwinkel betrachtet.

Aus Fig. 7A geht hervor, dass für das Verhältnis B1/B2 > 1 der Auskoppelbereich 5 des Wellenleiters 1 als Pupille wirkt. Somit liegen an jedem Ort des Auskoppelbereiches 5 alle Winkel an.

Beim Spezialfall B1/B2 = 1 (Fig. 7B) propagiert lediglich der zentrale Feldwinkel unvignettiert durch den Wellenleiter 1. In diesem Fall bilden sowohl der Einkoppelbereich 4 als auch der Auskoppelbereich 5 die Pupille.

Bei einem Verhältnis von B1/B2 < 1 (Fig. 7C) ist der Einkoppelbereich 4 die Pupille des Wellenleiters 1, so dass an jedem Ort des Auskoppelbereiches 5 unterschiedliche Winkelbereiche anliegen und ausgekoppelt werden.

Ferner kann grundsätzlich in ein Sichtfeld (nachfolgend auch FoV) des Wellenleiters 1 und ein Sichtfeld (nachfolgend auch FoV genannt) des Detektorsystems 2 unterschieden werden. Das kleinere der beiden Sichtfelder (bzw. der beiden FoV) bestimmt dabei das Sichtfeld des Gesamtsystems.

Das vom Wellenleiter 1 aufgenommene und wieder ausgekoppelte horizontale FoV (in x-Richtung) bei der Unendlich-Unendlich-Konfiguration des Wellenleiters 1 wird von den Breiten B1, B2 des Einkoppelbereiches 4 und des Auskoppelbereichs 5 sowie deren Abstand D zueinander bestimmt (unabhängig davon, ob die Pupille auf dem Einkoppelbereich 4 und/oder dem Auskoppelbereich 5 liegt). Das FoV des Detektorsystems 2 ist in erster Näherung durch die Brennweite des Objektives 10 (bzw. der im Auskoppelbereich 5 enthaltenen Linsenfunktion) und durch die Größe des Detektors 11 in Richtung des horizontalen FoV gegeben.

Im Idealfall ist das FoV des Wellenleiters 1 und des Detektorsystems 2 identisch. Dadurch ergibt sich die optimale Auflösung über das gesamte FoV des Wellenleiters 1. Solange das FoV des Detektorsystems 2 größer ist als das FoV des Wellenleiters 1, ist das horizontale FoV des Gesamtsystems durch die Breite des Einkoppelbereiches 4, die Breite des Auskoppelbereiches 5 sowie den Abstand D von Einkoppelbereich 4 zu Auskoppelbereich 5 gegeben. In vorteilhafter Weise wird somit das gesamte FoV aufgenommen. Jedoch liegt eine reduzierte Auflösung vor. Für den Fall, dass das horizontale FoV des Detektorsystems 2 kleiner ist als das FoV des Wellenleiters 1, wird das FoV des Gesamtsystems durch das FoV des Detektorsystems beschränkt. Dies führt zu dem Vorteil der erhöhten Auflösung, wobei nur ein Teil des FoV des Wellenleiters 1 aufgenommen wird. Bei der Verwendung des Objektives 10 kann es unter Umständen dazu kommen, dass der Abstand des Detektorsystems 2 vom Wellenleiter 1 das FoV einschränkt, da äußere Winkelbereiche nicht mehr vom Objektiv 10 aufgenommen werden können, wie in Fig. 7D angedeutet ist.

Eine gewünschte Abstimmung des FoV des Wellenleiters 1 an das FoV des Detektorsystems 2 kann durch Anpassung von B1, B2 und D erfolgen. Eine gewünschte Anpassung des FoV des Detektorsystems 2 an das FoV des Wellenleiters 1 kann durch Anpassung der Objektivbrennweite und / oder die Größe des Detektors erfolgen.

Wie bereits dargelegt wurde, wird durch das Verhältnis der Breite B1 des Einkoppelbereiches 4 zur Breite B2 des Auskoppelbereiches 5 die Pupillenlage des Wellenleiters 1 festgelegt. Infolgedessen ändert sich die Form der am Auskoppelbereich 5 anliegenden Winkelverteilung. Daraus ergeben sich für bestimmte Anordnungen und Anwendungen vorteilhafte Eigenschaften.

Für den Fall, dass B1/B2 > 1 ist, bildet der Auskoppelbereich 5 die Pupille des Wellenleiters 1. Bei Betrachtung aller nicht-vignettierten Strahlenbündel liegen somit an jedem Ort des Auskoppelbereiches 5 alle Feldwinkel an. Infolgedessen können alle Feldwinkel, d. h. das komplette FoV des Wellenleiters 1, mit nur einem Detektorsystem 2 mit ausreichend großem FoV und als ausreichend große Eintrittspupille aufgenommen werden. Zum Erreichen eines großen FoV des Wellenleiters 1 ist es somit vorteilhaft, den Einkoppelbereich 4 breiter auszubilden als den Auskoppelbereich 5. Auch ist ein geringer Abstand zwischen Einkoppelbereich 4 und Auskoppelbereich 5 von Vorteil.

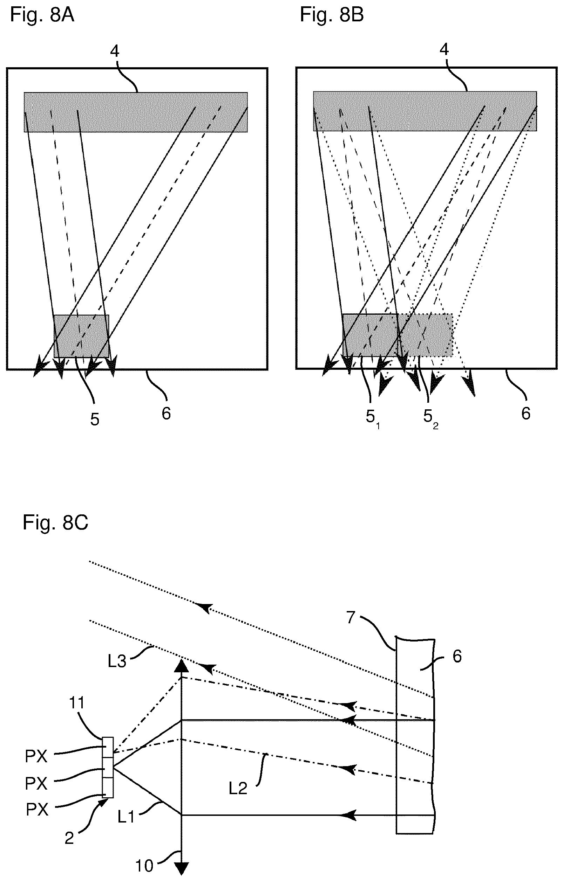

Bei der Darstellung gemäß Fig. 7A wurde davon ausgegangen, dass eine horizontale symmetrische Anordnung von Einkoppelbereich 4 und Auskoppelbereich 5 vorliegt, wodurch sich ein symmetrisches FoV des Wellenleiters 1 ergibt. Es ist jedoch möglich, den Auskoppelbereich 5 lateral (in x-Richtung) zu versetzen, wie in Fig. 8A angedeutet ist. Dadurch ergibt sich auch ein Versatz des horizontalen FoV. Ohne eine entsprechende Korrektur des Auskoppelbereiches 5 wird diese Winkelverteilung mit dem entsprechenden Offset durch das Verschieben auch verschoben auf dem Detektor 11 erzeugt. Dies könnte zur Folge haben, dass das FoV des Detektorsystems 2 überschritten und damit das Gesamt-FoV eingeschränkt wird. Dies kann dadurch verändert werden, dass eine zusätzliche Ablenkfunktion (wie z. B. eines Prismas, eines verkippten Spiegels, eines linearen Gitters, etc.) in den Auskoppelbereich 5 implementiert wird. Damit kann der Offset des ausgekoppelten Winkelspektrums kompensiert (oder symmetrisiert) werden und das Auskoppel-FoV wieder an das FoV des Detektorsystems 2 angeglichen werden. Alternativ ist es auch möglich, das Detektorsystem 2 entsprechen dem Winkeloffset zu verkippen. Wenn nicht nur ein verschobener Auskoppelbereich 5 vorgesehen ist, sondern mehrere Auskoppelbereiche $5_1$, $5_2$ nebeneinander, inklusive einer entsprechenden Kompensation und angepasstem Detektionssystem 2, kann ein aus mehreren einzelnen FoV zusammengesetztes vergrößertes horizontales FoV generiert werden (Fig. 8B).

Bei dieser Ausgestaltung kann zwar der Grenzfall erreicht werden, dass die Breite aller Auskoppelbereiche 5 zusammen gleich der Breite des Einkoppelbereiches 4 ist. Wesentlich ist jedoch, dass jeder einzelne Auskoppelbereich 5 in Bezug auf den Einkoppelbereich 4 separat zu betrachten ist. Solange für jeden einzelnen Auskoppelbereich 5 das Verhältnis der Breite B1/B2 > 1 ist, bleibt jeder Auskoppelbereich 5 die Pupille des Systems, so dass die beschriebenen Zusammenhänge weiterhin gelten.

Die am Beispiel der horizontale Pupillenlage und des horizontalen FoV beschriebenen Zusammenhänge können ebenso auf die vertikale Pupillenlage und das vertikale FoV bezogen werden, wobei die Faltung des Strahlengangs in dieser Richtung zu berücksichtigen ist. In vertikaler Richtung ergeben sich jedoch die nachfolgenden Besonderheiten, wobei auch vignettierte Strahlenbündel betrachtet werden.

Das durch ein hypothetisches unendlich ausgedehntes Wellenleitersystem aufgenommene und zur Auskoppelfläche weitergeleitete vertikale FoV ist bei der Unendlich-Unendlich-Konfiguration des Wellenleiters 1 gegeben durch den Grenzwinkel der Totalreflexion innerhalb des Wellenleiters 1 und dem Propagationswinkel von kleiner als 90° relativ zum Lot der Wellenleitergrenzfläche bzw. der Vorderseite 7 und der Rückseite 8. Für endlich ausgedehnte, realistische Wellenleiter 1 ist jedoch ein Propagationswinkel von kleiner als 80° relativ zum Lot der Vorderseite 7 oder der Rückseite 8 zu realisieren um sicherzustellen, dass Strahlenbündel L1 - L3 aus einem großen Winkelbereich zum Auskoppelbereich 5 und nicht an diesem vorbei propagieren. Für eine übliche Brechzahl von 1,5 breitet sich im Wellenleiter 1 somit ein Winkelbereich zwischen 40° und 80° relativ zum Lot der Vorderseite 7 bzw. Rückseite 8 aus und wird vom Auskoppelbereich 5 wieder ausgekoppelt.

Ebenso wie das horizontale FoV kann auch das vertikale FoV des Gesamtsystems (Wellenleiter 1 zusammen mit dem Detektorsystem 2) durch das vertikale FoV des Detektorsystems 2 eingeschränkt werden. Infolge des spektral aufgeteilten ein- und wieder ausgekoppelten Winkelbereiches kann zudem die spektrale Empfindlichkeit des Detektors 11 einschränkend auf das vertikale FoV wirken. Ist beispielsweise der Detektor 11 für besonders langwellige und/oder kurzwellige Strahlung nicht empfänglich, verkleinert sich die effektive Ausdehnung des Detektors 11 und somit das vertikale FoV des Detektorsystems 2 (Fig. 8C).

Bei den beschriebenen Ausführungsbeispielen weist das Bild auf dem Detektor den beschriebenen Farbverlauf auf, so dass kein Vollfarbenbild mittels des Wellenleiters 1 weitergeleitet und aufgenommen werden kann.

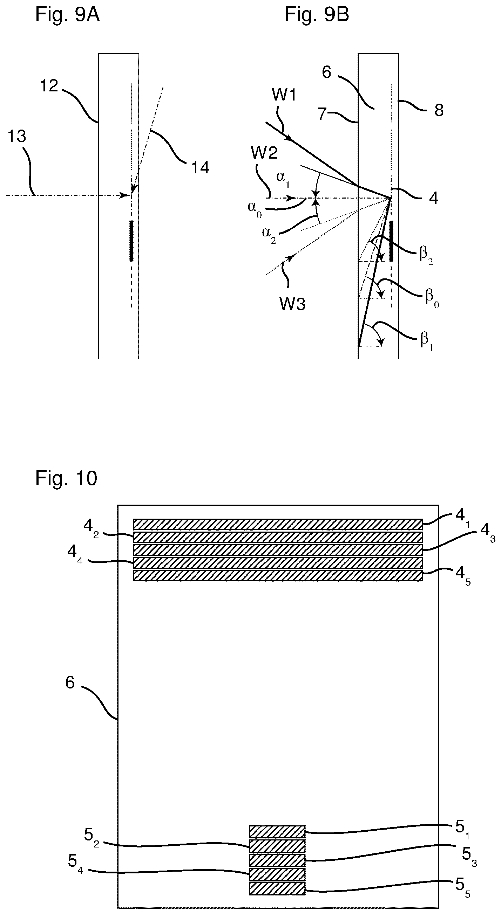

Die beschriebenen reflektiven Volumenhologramme für den Einkoppelbereich 4 und den Auskoppelbereich 5 können beispielsweise so hergestellt werden, dass ein fotosensitives volumenholographische Material 12, das in den Wellenleiter 1 integriert ist, mit einer Referenzwelle 13 mit der Wellenlänge von 532 nm, die unter einem Einfallswinkel von 0° auf die Vorderseite 7 einfällt und einer Signalwelle 14 mit der gleichen Wellenlänge, die unter einem Einfallswinkel von 60° auf die Rückseite 8 einfällt, belichtet wird, wie in Fig. 9A gezeigt ist, wobei die Referenzwelle 13 und die Signalwelle 14 vom selben Laser stammen, so dass ein Interferenzfeld bzw. Interferenzvolumen über das fotosensitive volumenholographische Material entsteht und sich dort entsprechende Brechzahlmodifikationen ausbilden können.

Als fotosensitive volumenholographische Materialen können fotosensitive Gläser, Dichromat-Gelatinen oder Fotopolymere verwendet werden. Diese können z. B. auf eine PC-Folie (Polycarbonat-Folie) aufgebracht und dort entsprechend belichtet werden. Die Folie kann dann auf ein Substrat für den Wellenleiter 1 laminiert werden, um den Wellenleiter 1 herzustellen. Dabei kann die Folie beispielsweise nur in dem Bereich des Einkoppelbereiches 4 und des Auskoppelbereiches 5 laminiert werden. Alternativ ist eine vollflächige Lamination über die gesamte Wellenleiterfläche möglich, wobei leidglich in die Ein- und Auskoppelbereiche die entsprechende Ein- und Auskoppelfunktion einbelichtet wird. Zum Schutz der Volumenhologramme ist es sinnvoll, ein weiteres Substrat auf das auflaminierte Volumenhologramm aufzubringen. Somit wird ein Schichtstapel mit folgendem prinzipiellen Aufbau realisiert: transparentes Substrat, Kitt- bzw. Kleberschicht, Volumenhologramm, Kitt- bzw. Kleberschicht, transparentes Substrat Aufgrund der bereits beschriebenen spektralen Winkelabhängigkeit wird von einer einfallenden Planwelle W1 (Fig. 9B), die im Material unter einem Winkel von + 20° auf das reflektive Volumenhologramm trifft, der Spektralbereich von 605 nm $\pm$ 5 nm zur Vorderseite 7 hin so umgelenkt, dass die umgelenkte Welle W1 unter einem Winkel von ß$_1$ von ungefähr 40° auf die Vorderseite 7 trifft. Für die restlichen Wellenlängen der Planwelle W1 ist das reflektive Volumenhologramm des Einkoppelbereiches 4 transparent.

Bei einer Planwelle W2, die unter einem Winkel von 0° das reflektive Volumenhologramm trifft, werden die Wellenlängen aus dem Bereich von 532 nm $\pm$ 4 nm so reflektiert, dass sie unter einem Winkel ß$_2$ von ungefähr 60° auf die Vorderseite 7 treffen. Die restlichen Wellenlängen der Planwelle W2 laufen durch das reflektive Volumenhologramm hindurch, so dass das reflektive Volumenhologramm für diese Wellenlängen der Planwelle W2 transparent ist.

Von einer Planwelle W3, die im Material unter einem Winkel von - 20° auf das reflektive Volumenhologramm trifft, werden die Wellenlängen von 395 nm $\pm$ 3 nm so zur Vorderseite reflektiert, dass sie auf die Vorderseite unter einem Winkel von ß$_3$ von ungefähr 80° treffen. Die restlichen Wellenlängen der Planwelle W3 laufen durch das reflektive Volumenhologramm hindurch, so dass für diese Wellenlängen das reflektive Volumenhologramm transparent ist.

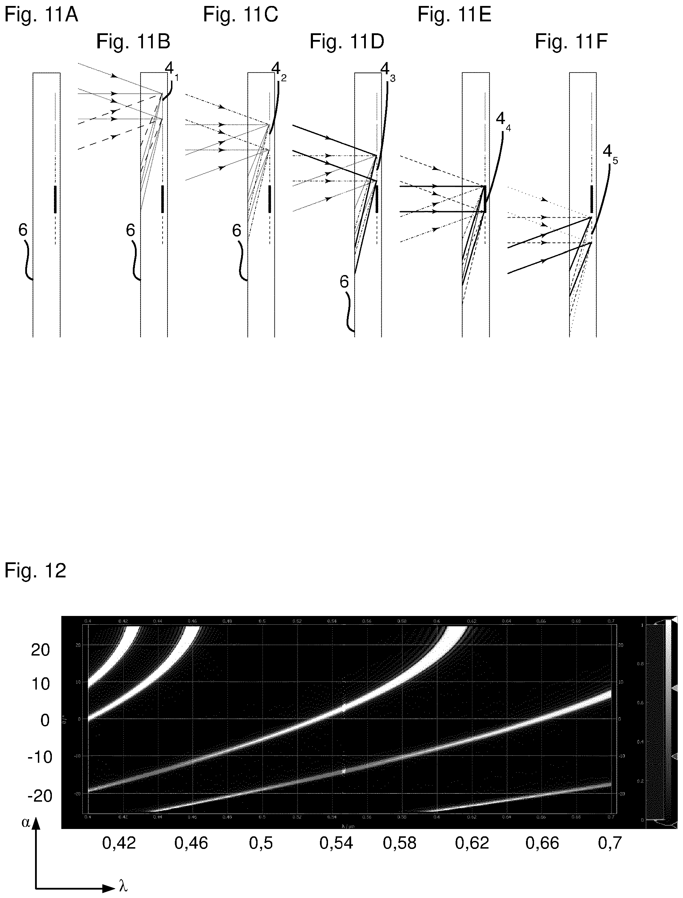

Um die Übertragung von Winkelinformationen (Bildinformationen aus dem Unendlichen) durch den Wellenleiter 1 in einem möglichst großen Spektralbereich zu realisieren, kann das in Fig. 4 gezeigte winkelabhängige Spektrum dadurch verbessert werden, dass der Einkoppelbereich 4 nicht nur ein reflektives Volumenhologramm aufweist, sondern mehrere untereinander angeordnete reflektive Volumenhologramme 4$_1$, 4$_2$, 4$_3$, 4$_4$ und 4$_5$ aufweist, wie in Fig. 10 und Fig. 11A-F gezeigt ist. Die Volumenhologramme 4$_1$ - 4$_5$ unterscheiden sich darin, dass sie unterschiedliche spektrale Winkelselektivitäten aufweisen, wodurch bei gleichem Einfallswinkel unterschiedliche Wellenlängen von den Volumenhologrammen 4$_1$ - 4$_5$ reflektiert werden. Aufgrund dieser Winkelselektivität wird Strahlung, die z. B. vom Volumenhologramm 4$_1$ durch Reflexion zur Vorderseite 7 hin in den Wellenleiter 1 eingekoppelt wird, nicht von den darunterliegenden Hologrammen 4$_2$ - 4$_5$ (oder nur geringfügig) beeinflusst, so dass die eingekoppelte Strahlung (weitestgehend) unbeeinflusst zum Auskoppelbereich 5 propagieren kann.

Die Volumenhologramme 4$_1$ - 4$_5$ können auch übereinander in z-Richtung angeordnet werden, so dass ein Schichtstapel auf dem Wellenleiter entsteht. Des Weiteren ist die Implementierung der Funktionen aller fünf Hologramme in ein Hologramm (bzw. Volumenhologramm), auch Multiplexing genannt, möglich.

Die unterschiedlichen spektralen Winkeleigenschaften können z. B. dadurch erreicht werden, dass bei gleicher Winkeleinstellung wie in Fig. 9A unterschiedliche Wellenlängen für die Referenzwelle 12 und die Signalwelle 13 verwendet werden. Alternativ ist es möglich, gleiche Wellenlängen für alle Volumenhologramme 4$_1$ - 4$_5$ zu verwenden, wobei der Einfallswinkel der Referenzwelle 12 und der Signalwelle 13 geeignet variiert wird.

Die reflektiven Volumenhologramme 4$_1$ - 4$_5$ wurden mit der Belichtungskonfiguration gemäß Fig. 9A bei unterschiedlichen Wellenlängen aufgenommen. So betrug die Belichtungswellenlänge für das Volumenhologramm 4$_1$ 900 nm (schwarz), für das Volumenhologramm 4$_2$ 660 nm (rot), für das Volumenhologramm 4$_3$ 532 nm (grün), für das Volumenhologramm 4$_4$ 400 nm (blau) und für das Volumenhologramm 4$_5$ 370 nm (violett).

In Fig. 11B-11F ist die Einkopplung des Winkelbereiches durch den minimalen Winkel von - 20°, den maximalen Winkel von + 20° und den zentralen Einfallswinkel von 0° für jedes der Volumenhologramme $4_1$ - $4_5$ schematisch dargestellt. Unter 0° wird dabei durch jedes reflektive Volumenhologramm $4_1$ - $4_5$ jeweils der Spektralbereich um die zentrale Wellenlänge, mit der die Belichtung des jeweiligen reflektiven Volumenhologramms $4_1$ - $4_5$ vorgenommen wurde, abgelenkt und eingekoppelt.

In Fig. 12 ist in gleicher Weise wie in Fig. 4 das simulierte Gesamtspektrum gezeigt, das von den fünf reflektiven Volumenhologrammen $4_1$ - $4_5$ in den Wellenleiter 1 eingekoppelt wird. Demnach trägt jedes reflektive Volumenhologramm $4_1$ - $4_5$ in jedem Einfallswinkel mit einem anderen Spektralbereich bei. Bei Betrachtung der Gesamtheit aller reflektiven Volumenhologramme $4_1$ - $4_5$ wird dadurch die spektrale Bandbreite in den einzelnen Winkeln vergrößert und letztendlich in Summe über alle Einfallswinkel eine breitbandige Bildentstehung gewährleistet.

Des Weiteren kann Fig. 12 die Verschiebung des eingekoppelten Spektrums in Richtung kürzerer Wellenlängen mit steigendem Einfallswinkel und die Verschiebung des eingekoppelten Spektrums in Richtung größerer Wellenlängen für abnehmende Einfallswinkel entnommen werden.

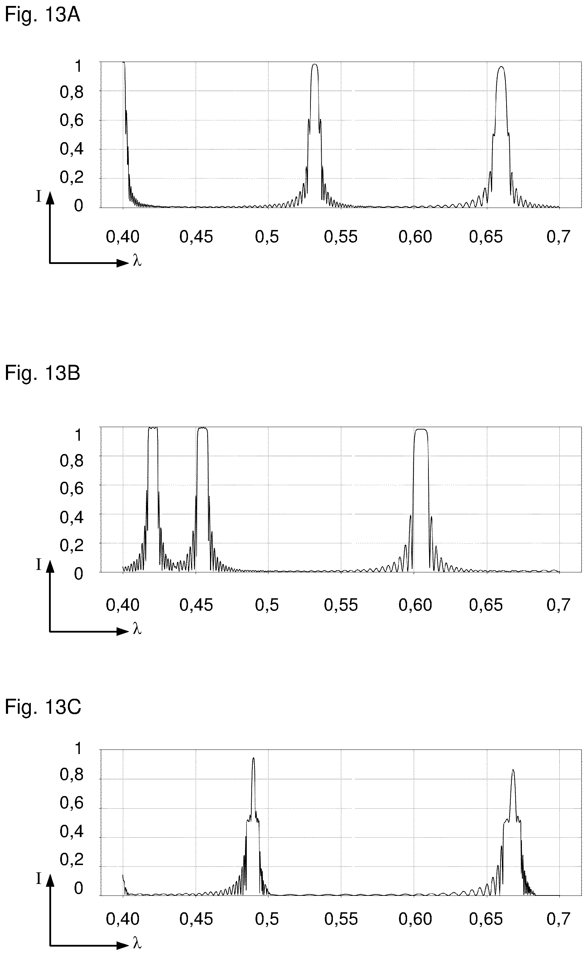

Fig. 13A zeigt beispielhaft das mit dem Einfallswinkel von 0° eingekoppelte Spektrum. Fig. 13B zeigt das entsprechende Spektrum für den Einfallswinkel von + 20° und das eingekoppelte Spektrum für den Einfallswinkel von - 20° ist in Fig. 13C dargestellt. Bei allen Darstellungen gemäß Fig. 13A - 13C ist entlang der x-Achse die Wellenlänge in $\mu$m und entlang der y-Achse die Einkoppeleffizienz im Bereich von 0 (keine Einkopplung) bis 1 (vollständig Einkopplung) dargestellt. Ein Vergleich mit der Darstellung gemäß Fig. 5 zeigt, dass im Vergleich zu einem einzigen reflektiven Volumenhologramm eine wesentlich verbesserte Abtastung des eingekoppelten Spektrums infolge der Verwendung einer höheren Anzahl (fünf reflektive Volumenhologramme im Vergleich zu einem reflektiven Volumenhologramm) gezielt aufgenommener Volumenhologramme vorliegt.

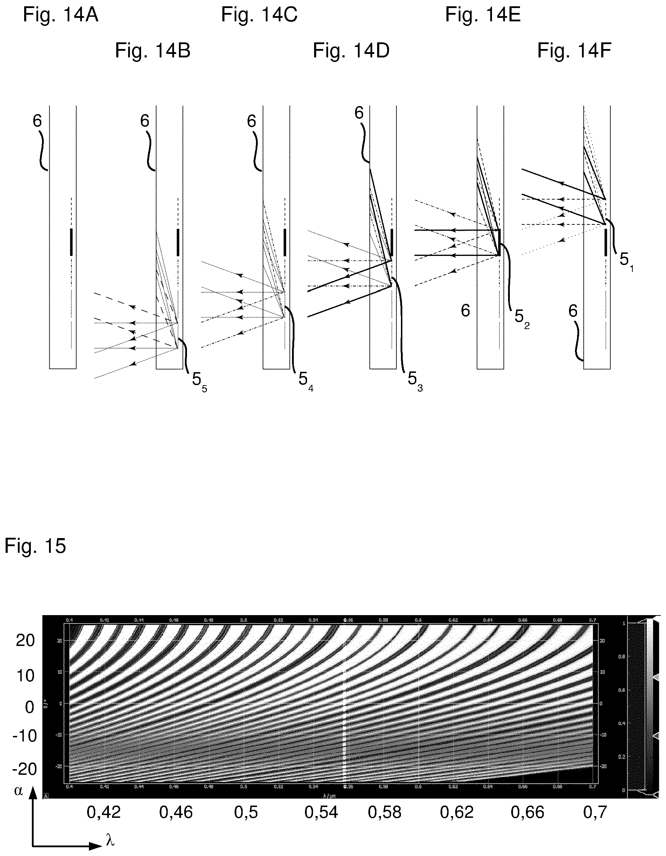

In Fig. 14 sind die entsprechenden reflektiven Volumenhologramme $5_1$ - $5_5$ zur Auskopplung gezeigt. Die Gesamthöhe der reflektiven Volumenhologramme $5_1$ - $5_5$ wird bevorzugt ähnlich zur Eintrittspupille 14 des Detektorsystems 2 gewählt, um möglichst viel Licht detektieren zu können.

Ebenso wie bei den Einkoppelhologrammen können die Volumenhologramme $5_1$ - $5_5$ zur Auskopplung auch übereinander in z-Richtung angeordnet werden, so dass ein Schichtstapel auf dem Wellenleiter entsteht. Des Weiteren ist die Implementierung der Funktionen aller fünf Hologramme in ein Hologramm bzw. ein Volumenhologramm, auch Multiplexing genannt, möglich.

Um z. B. in jedem Winkel ein nahezu kontinuierliches Spektrum in den Wellenleiter 1 einkoppeln zu können, wodurch die Weiterleitung von Vollfarben-Bildinformationen gewährleistet wird, können z. B. vierzig gezielt belichtete reflektive Volumenhologramme übereinander angeordnet werden. Eine entsprechende Simulation des winkelabhängigen Einkoppelspektrums ist in Fig. 15 dargestellt. Die Belichtungswellenlängen für die Aufnahme der einzelnen reflektiven Volumenhologramme entsprechend der Belichtungskonfiguration in Fig. 9A können beispielsweise wie folgt gewählt werden, wobei jeweils die Wellenlänge in nm angegeben ist: 358, 368, 378, 389, 400, 411, 421, 432, 443, 454, 464, 474, 487, 498, 509, 519, 532, 544, 556, 568, 583, 598, 613, 629, 645, 662, 679, 696, 715, 735, 755, 775, 795, 815, 835, 855, 875, 896, 917 und 940.

Alternativ können die reflektiven Volumenhologramme auch bei einer Wellenlänge und angepassten Belichtungswinkeln der Referenz- und Signalwelle 12, 13 aufgenommen werden.

Nach Propagation der Strahlung im Wellenleiter 1 bis zum Auskoppelbereich 5 liegen dort in der Regel in einer verhältnismäßig großen Fläche alle Winkel und das komplette Spektrum an jedem Ort dieses ausgedehnten Auskoppelbereiches 5 vor. Die Auskopplung kann dann, wie bisher beschrieben, mit entsprechenden reflektiven Volumenhologrammen durchgeführt werden. Bevorzugt werden die gleichen vierzig Volumenhologramme erzeugt, wie sie im Einkoppelbereich 4 vorliegen.

Da der Auskoppelbereich 5 aber häufig gar nicht transparent sein muss, ist auch jede andere Art der Auskopplung der bis zum Auskoppelbereich 5 propagierten Strahlung möglich. So kann eine verkippte Spiegelfläche, ein Prisma, verspiegelte Gitter, Transmissionsgitter und/oder Multi-Order-Fresnel-Strukturen in Transmission oder Reflexion eingesetzt werden. An dieser Stelle des Wellenleiters 1 ist die Verwendung nicht transparenter optischer Oberflächen möglich, da sie ohnehin ein nicht transparenter Detektor 11 vorzusehen ist.

Diese Möglichkeit der Ausbildung des Auskoppelbereiches 5 gilt natürlich auch für die bereits beschriebenen Ausführungsbeispiele und für die noch zu beschreibenden Ausführungsbeispiele.

Die verkippte Spiegelfläche, die Multi-Order-Fresnel-Struktur in Reflexion oder Transmission weisen in vorteilhafter Weise eine hohe Effizienz auf und bringen keine zusätzliche Dispersion bei der Umlenkung ein. Jedoch führen sie auch zu keiner Dispersionskompensation. Verspiegelte Gitter und Transmissionsgitter zur Auskopplung können eine gewünschte Dispersionskorrektur durchführen. Sie weisen jedoch eine niedrigere Effizienz auf. Ein Prisma weist eine hohe Effizienz auf, kann aber in nachteiliger Weise die Dispersion verstärken. Bei der Ausbildung der reflektiven Volumenhologramme liegt in vorteilhafter Weise die gewünschte Dispersionskorrektur vor, da jeder Wellenlängenkanal über ein separates reflektives Volumenhologramm ausgekoppelt wird. Es liegt jedoch eine relativ geringe Effizienz vor, weil die Fläche des Auskoppelbereiches 5 durch die Zahl der einzelnen reflektiven Volumenhologramme geteilt werden muss.

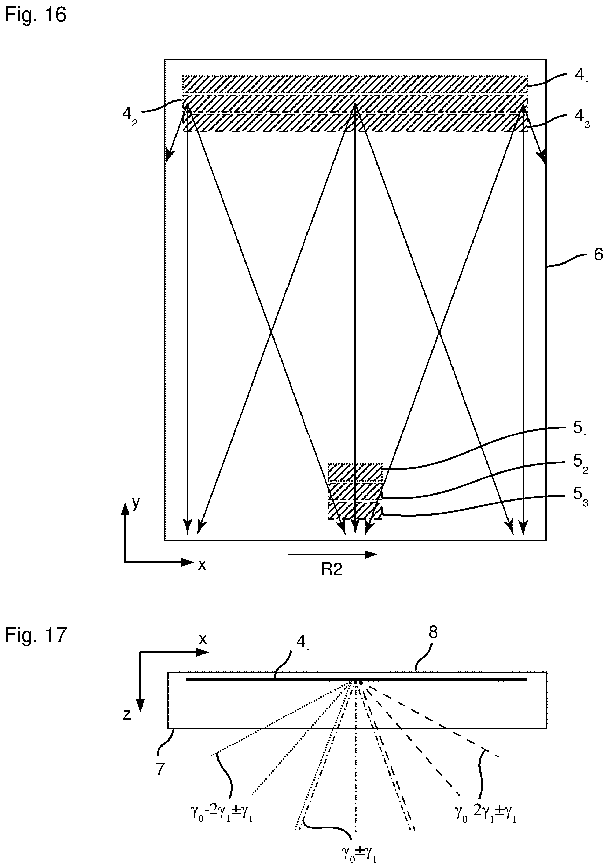

In Figuren 16 bis 18B ist ein Ausführungsbeispiel des Wellenleiters 1 gezeigt, bei dem das horizontale FoV (also das FoV in der x-z-Ebene) vergrößert ist. Es wird dabei davon ausgegangen, dass das FoV des Detektorsystems 2 nicht das FoV des Wellenleiters 1 einschränkt.

Der Einkoppelbereich 4 umfasst drei gleich breite reflektive Volumenhologramme $4_1$, $4_2$ und $4_3$, die übereinander (in y-Richtung) angeordnet sind und die in der x-z-Ebene unterschiedliche Winkelbereiche und somit unterschiedliche horizontale Sichtfelder abdecken, wie insbesondere in der Ansicht von oben in Fig. 17 im Winkelraum dargestellt ist.

Alternativ zur Anordnung der Hologramme $4_1$, $4_2$ und $4_3$ übereinander in y-Richtung können diese auch übereinander in z-Richtung angeordnet werden, so dass ein Schichtstapel auf dem Wellenleiter entsteht. Des Weiteren ist die Implementierung der einzelnen Hologrammfunktionen aller drei Hologramme in ein Hologramm (bzw. Volumenhologramm), auch Multiplexing genannt, möglich.

So kann beispielsweise das zweite reflektive Volumenhologramm $4_2$ in der x-z-Ebene den Winkelbereich $\gamma_0 \pm \gamma_1$ und somit für $\gamma_0 = 0$ ein zentrales Sichtfeld abdecken. Das zentrale Sichtfeld ist dabei beispielsweise durch die Breite des zweiten Volumenhologramms $4_2$, die Breite des entsprechend zugeordneten zweiten Auskoppelhologramms $5_2$ und durch den Abstand der beiden Volumenhologramme $4_2$, $5_2$ gegeben.

Das erste reflektive Volumenhologramm $4_1$ weist im Vergleich zum zweiten reflektiven Volumenhologramm $4_2$ eine zusätzliche eindimensionale Ablenkfunktion in horizontaler Richtung (in der x-z-Ebene) auf. Das dem ersten Volumenhologramm $4_1$ zugeordnete horizontale Sichtfeld ist somit um den Betrag der aufgeprägten Ablenkfunktion (Winkel-Offset) im Winkelbereich verschoben und beträgt $\gamma_0 - 2 \cdot \gamma_1 \pm \gamma_1$. Eine entsprechende aufgeprägte Ablenkfunktion für das dritte reflektive Volumenhologramm $4_3$ führt zu einem horizontalen Sichtfeld von $\gamma_0 + 2 \cdot \gamma_1 + \gamma_1$. Somit kann mit jedem Volumenhologramm $4_1$ - $4_3$ in Kombination mit dem entsprechenden Volumenhologramm $5_1$ - $5_3$ zur Auskopplung ein anderes horizontales FoV übertragen werden. Mit Hilfe des Betrages und der Richtung der jeweils aufgeprägten Ablenkfunktion (Winkel-Offset) kann gezielt Einfluss auf das Gesamt-FoV genommen werden. So können beispielsweise symmetrische oder auch asymmetrische Gesamt-FoV sowie FoV mit überschneidenden Teil-FoV bzw. Lücken zwischen den Teil-FoV erzeugt werden.

Um ein möglichst großes, symmetrisches und lückenloses horizontales FoV entsprechend Fig. 17 zu erreichen, sind die implementierten Ablenkfunktionen entsprechend der Vorschrift im vorangegangenen Abschnitt derart zu wählen, dass die Winkelbereiche aneinander angrenzen und sich möglichst wenig überlappen.

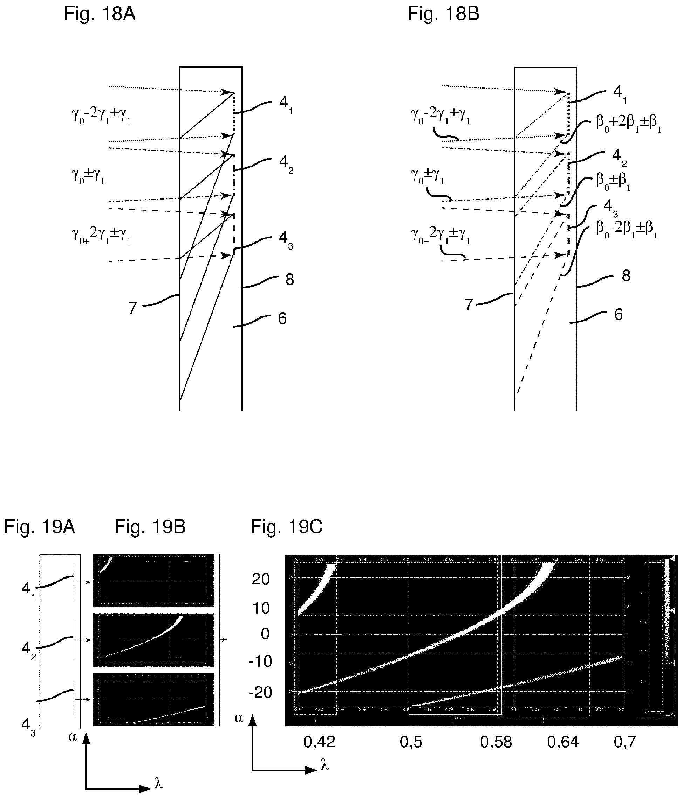

Bei dem hier beschriebenen Ausführungsbeispiel propagieren alle horizontalen Winkelbereiche nach der Einkopplung im gleichen horizontalen Kanal, wie in Fig. 16 angedeutet ist. Dies ist auch erforderlich, um die Detektion mit nur einem Detektionssystem 2 zu gewährleisten. Werden alle Einkoppelhologramme $4_1$ - $4_3$ bis auf die Ablenkfunktion identisch aufgenommen, kommt es zudem entsprechend Fig. 18A auch zur Überlagerung in vertikaler Richtung. Nach der Auskopplung würden also alle horizontalen FoV auf dem Detektor 11 überlagert. Zur Differenzierung der einzelnen horizontalen Winkelbereiche sieht das hier beschriebene Ausführungsbeispiel eine Codierung der horizontalen Winkelbereiche in einer entsprechenden Anzahl vertikaler Winkelbereiche entsprechend Fig. 18B vor. Dabei wurde hier darauf geachtet, dass der Einkoppelbereich 4 bei normaler Durchsicht in einem großen Winkel - und Wellenlängenbereich transparent bleibt. Die Codierung der horizontalen Winkelbereiche in vertikale Winkelbereiche kann so erfolgen, dass die reflektiven Volumenhologramme $4_1$ bis $4_3$ so ausgebildet sind, dass sie in unterschiedliche vertikale Propagationswinkelbereiche innerhalb des Wellenleiters 1 ablenken. Hierfür können die reflektiven Volumenhologramme mit entsprechenden Ablenkeigenschaften eingesetzt werden. Alternativ kann vor jedem reflektiven Volumenhologramm $4_1$ - $4_3$ eine nicht gezeigte Lamellenstruktur (Stege) zur Einschränkung des jeweiligen vertikalen FoV angebracht werden. Dadurch wird jedoch die Transparenz im Einkoppelbereich 4 erheblich eingeschränkt.

Mit dieser Differenzierung der unterschiedlichen vertikalen Propagationswinkelbereiche propagiert die Strahlung von jedem Einkoppelvolumenhologramm $4_1$ - $4_3$ und somit auch jedes horizontale FoV in einem anderen vertikalen FoV. Nach der Auskopplung werden die unterschiedlichen vertikalen FoV dann in lateral übereinanderliegende, aneinandergrenzende Ortsverteilungen auf den Detektor 11 überführt. Damit kann ein vergrößertes horizontales FoV aufgenommen werden, wobei das vertikale FoV um den Vergrößerungsfaktor des horizontalen FoV verkleinert wird.

In einer alternativen Variante kann die nachfolgend näher erläuterte detektorseitige spektrale und winkelabhängige Separation der im vertikalen FoV codierten horizontalen FoV eingesetzt werden.

Wird jedes horizontale FoV bis auf die Ablenkfunktion (Winkel-Offset) mit einem gleich ausgebildeten Volumenhologramm eingekoppelt, propagiert jedes horizontale FoV im gleichen vertikalen Winkelbereich und Spektralbereich durch den Wellenleiter 1. Es ergibt sich für jedes horizontale FoV näherungsweise z. B. das in Fig. 4 gezeigte einfallswinkelabhängige Spektrum. Eine detektorseitige Separation ist dann nicht mehr möglich.

Alternativ kann jedoch jedes horizontale FoV mit einem speziellen Volumenhologramm in verschiedene Richtungen im Wellenleiter 1 eingekoppelt werden, wobei jedes Volumenhologramm $4_1$ - $4_3$ in einer anderen Konfiguration (Belichtungswinkel und/oder Wellenlänge) aufgenommen wurde.

In Fig. 19A, 19B und 19C sind die einfallswinkel- und spektralabhängigen Effizienzen der lateral zueinander versetzten Einkoppelvolumenhologramme $4_1$, $4_2$ und $4_3$ (Fig. 18B) dargestellt. Bei der nachfolgenden Betrachtung wird davon ausgegangen, dass der vertikal eingekoppelte Winkelbereich durch Totalreflexion im Wellenleiter auf $\pm$ 20° beschränkt ist. Des Weiteren weist der Detektor 11 lediglich eine spektrale Empfindlichkeit von 400 nm bis 700 nm auf. Das Vorgehen ist natürlich auch auf andere vertikale Winkelbereiche und Detektorempfindlichkeiten übertragbar.

Entsprechend der Darstellung in Fig. 19B koppelt das erste Volumenhologramm $4_1$ einen Einfallswinkelbereich zwischen 6,67° und 20° in einem Spektralbereich zwischen 400 nm und 440 nm in den Wellenleiter 1 ein. Im Gegensatz zum ersten Volumenhologramm $4_1$ koppelt das zweite Volumenhologramm $4_2$ Strahlung aus dem gesamten Einfallswinkelbereich über ein Spektrum vom 400 nm bis 650 nm in den Wellenleiter 1 ein. Das dritte Volumenhologramm $4_3$ wird den Einfallswinkelbereich zwischen - 6,67° und - 20° in einem Spektralbereich von 565 nm bis 700 nm in den Wellenleiter 1 einkoppeln. Somit wird jedes horizontale Sichtfeld durch ein spezielles Volumenhologramm $4_1$ - $4_3$ mit unterschiedlichen Eigenschaften in den Wellenleiter 1 eingekoppelt. Diese Eigenschaften werden nach der Auskopplung zur Separation des horizontalen FoV ausgenutzt.

Die Hologramme $4_1$, $4_2$ und $4_3$ können auch übereinander in z-Richtung angeordnet werden, so dass ein Schichtstapel auf dem Wellenleiter entsteht. Des Weiteren ist die Implementierung der einzelnen Hologrammfunktionen aller drei Hologramme in ein Hologramm (bzw. Volumenhologramm), auch Multiplexing genannt, möglich.

Im Auskoppelbereich 5 ist damit zu rechnen, dass an jedem Ort das von allen Einkoppelvolumenhologrammen $4_1$ - $4_3$ eingekoppelte spektrale Winkelspektrum anliegt. Im Auskoppelbereich 5 sind Volumenhologramme $5_1$, $5_2$, $5_3$ mit einem zur vertikalen Einkopplung identischen Verhalten lateral versetzt übereinander angeordnet. Jedes dieser Hologramme $5_1$ - $5_3$ sorgt dann für die Auskopplung der vom korrespondierenden Einkoppelvolumenhologramm $4_1$ - $4_3$ eingekoppelten Strahlung mit der entsprechend Fig. 19A - 19C dargestellten spektralen Winkelverteilung.

Ebenso wie im Einkoppelbereich können die Hologramme $5_1$, $5_2$, $5_3$ alternativ übereinander in z-Richtung angeordnet werden, so dass ein Schichtstapel auf dem Wellenleiter entsteht. Des Weiteren ist die Implementierung der einzelnen Hologrammfunktionen aller drei Hologramme in ein Hologramm (bzw. Volumenhologramm), auch Multiplexing genannt, möglich.

Nach der Auskopplung erfolgt die Separation des Gesamtfeldes, so dass die unterschiedlichen horizontalen FoV einzeln detektiert werden können. Dafür wird zunächst die Detektorfläche des Detektors 11 vertikal aufgeteilt. Jeder Flächenanteil entspricht dabei einem vertikalen Winkelbereich. Die Anzahl der Flächenanteile (vertikalen Winkelbereiche) ist dabei identisch zu Anzahl der unterschiedlichen horizontalen FoV. Im Normalfall wird die Detektorfläche (vertikaler Gesamtwinkelbereich) in gleich große Flächenanteile unterteilt (es ist auch eine Unterteilung in unterschiedlich große Flächenanteile möglich). Entsprechend Fig. 19C kommt es jedoch infolge des typischen Verhaltens in Reflexionsvolumenhologrammen innerhalb der einzelnen Winkelbereiche zur spektralen Superposition, so dass letztendlich unterschiedliche horizontale FoV mit gleichen vertikalen FoV überlagert werden würden. Um dies zu vermeiden, können für jeden Teilbereich des Detektors 11, d. h. für jeden vertikalen Teilwinkelbereich, Spektralfilter vorgesehen werden, die bei einem entsprechenden Winkelbereich eine Unterdrückung nicht beabsichtigter Spektralanteile realisieren. Infolge dessen können die unterschiedlichen horizontalen FoV eindeutig unterschiedlichen Bereichen auf dem Detektor (d. h. vertikale Winkelbereiche/FoV) zugeordnet werden. Infolge dessen wird eine eindeutige Zuordnung der unterschiedlichen horizontalen FoV zu unterschiedlichen vertikalen FoV entsprechend Fig. 18b realisiert.

Alternativ zum Einsatz von Spektralfiltern ist auch die Verwendung spezieller Auskoppelvolumenhologramme möglich, die eine Auskopplung lediglich im geforderten Spektralbereich realisieren.

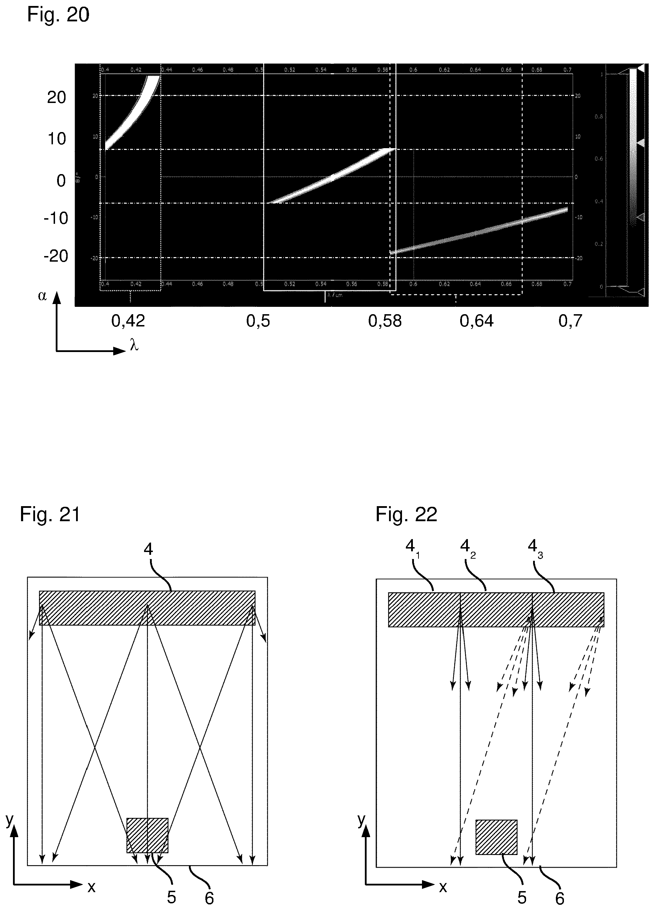

Nach Anwendung der Spektralfilter bzw. bei Verwendung der spektral angepassten Auskoppelvolumenhologramme ergibt sich das in Fig. 20 dargestellte winkelabhängige Spektrum. Es kommt somit nicht mehr zu Überlagerungen unterschiedlicher horizontaler FoV und somit zu einer eindeutigen Zuordnung des horizontalen FoV zu den entsprechenden vertikalen FoV.

Auf diese Weise wird das detektierbare horizontale FoV vergrößert. Allerdings führt dies zugleich zu einer Verkleinerung des vertikalen FoV.

Der Vorteil der beschriebenen spektralen Codierung des horizontalen FoV im vertikalen FoV im Vergleich zur Winkelcodierung des horizontalen FoV im vertikalen FoV besteht vor allem in der höheren Transparenz in einem großen Winkel- und Spektralbereich bei normaler Durchsicht durch den Einkoppelbereich 4.

Ein Nachteil der spektralen Codierung besteht darin, dass jedes horizontale FoV ein anderes Spektralband aufnimmt und dadurch Informationen verlorengehen können, wenn beispielsweise in einem bestimmten horizontalen FoV keine oder nur wenig Strahlung im entsprechenden Spektralbereich auftritt. Durch das Anbringen mehrerer Auskoppelbereiche mit entsprechend für die unterschiedlichen horizontalen FoV spektral verschobenen Einkoppelspektren, kann dieses Defizit ausgeglichen werden. Allerdings ist dann auch eine entsprechende Anzahl von Detektorsystemen 2 erforderlich.

Bei der allgemeinen Auslegung des Gesamtsystems des Wellenleiters 1 und der Auslegung der Ein- und Auskoppelvolumenhologramme im Speziellen sind folgende Aspekte zu berücksichtigen:

Zur Realisierung von n verschiedenen horizontalen FoV sind n unterschiedliche Ein- und Auskoppelvolumenhologramme sowie n Winkelbereiche (Detektorbereiche) inklusive entsprechender Band- oder Kantenfilterfunktionen erforderlich. Es werden n horizontale Winkelbereiche in n vertikale Winkelbereiche überführt.

Die Einzeleffizienzverläufe der Volumenhologramme dürfen keine spektralen Überschneidungen innerhalb des gleichen Winkelbereiches aufweisen, da ansonsten keine spektrale Separation der vertikalen FoV und somit auch der horizontalen FoV mehr möglich ist. Trotz spektraler Filterung würde es zur Überlagerung von Strahlungsanteilen unterschiedlicher horizontaler FoV kommen.

Um möglichst viel Strahlungsleistung aufzunehmen, ist jedes Volumenhologramm so auszulegen, dass im jeweils abgedeckten Winkelbereich ein möglichst großer Spektralbereich abgedeckt wird. Dabei ist jedoch auch die spektrale Empfindlichkeit des Detektors zu berücksichtigen. Beim Vergleich der winkel- und wellenlängenabhängigen Effizienzverläufe in Fig. 19B und 19C wird deutlich, dass im Winkelbereich zwischen +6,67° und +20° lediglich eine Bandbreite der Strahlung von 40 nm verwendet wird. Durch eine entsprechend optimierte Auslegung des Volumenhologramms wäre eine Vergrößerung dieser Bandbreite und somit die Einkopplung einer potentiell höheren Strahlungsleistung möglich. Im Gegensatz zum Winkelbereich zwischen + 6,67° und +20° wird im Winkelbereich zwischen -6,67° und -20° ein Spektralbereich von 135 nm eingekoppelt.

Die Unterteilung des horizontalen FoV ist an die spektralen Eigenschaften des Volumenhologramms gekoppelt. Im Normalfall sind alle vertikalen Teil-FoV gleich groß. Je nach Anwendung können aber auch unterschiedliche Größen des vertikalen FoV für die unterschiedlichen horizontalen FoV realisiert werden. Hierfür ist eine entsprechende Auslegung der Volumenhologramme in Kombination mit der Filterung vor den einzelnen Detektorbereichen erforderlich.

In Fig. 21 ist ein Ausführungsbeispiel des Wellenleiters 1 gezeigt, bei der der Einkoppelbereich 4 breiter ist als der Auskoppelbereich 5 und der Einkoppelbereich 4 durch ein reflektives Volumenhologramm realisiert ist. Auch der Auskoppelbereich 5 kann ein reflektives Volumenhologramm aufweisen. Das FoV ist dabei durch die Größe dieser Flächen und deren Abstand zueinander gegeben. Bei dem in Verbindung mit Fig. 22 beschriebenen Ausführungsbeispiel wird davon ausgegangen, dass das FoV des Detektorsystems 2 das FoV des Wellenleiters 11 nicht einschränkt.

Der Ansatz gemäß Fig. 22 zur Steigerung der Detektionseffizienz sieht vor, den Einkoppelbereich 4 vertikal (entlang der zweiten Richtung) in drei Sub-Einkoppelflächen $4_1$, $4_2$ und $4_3$ zu unterteilen. Während die zentrale Einkoppelfläche (bzw. das zentrale reflektive Volumenhologramm $4_1$) lediglich eine Funktion zur Ablenkung der Strahlung in die erste Richtung (nur in y-Richtung ohne x-Komponente) zum Auskoppelbereich 5 beinhaltet, wird in die rechte Sub-Einkoppelfläche $4_2$ zusätzlich eine horizontale Ablenkfunktion (bzw. eine x-Komponente der Ablenkung) entlang der zweiten Richtung (zum zentralen Volumenhologramm $4_1$ hin) hin integriert, wie in Fig. 22 schematisch angedeutet ist. Eine entsprechende horizontale Ablenkfunktion entlang der zweiten Richtung (zum zentralen Volumenhologramm $4_1$ hin) wird auch in die linke Sub-Einkoppelfläche $4_3$ integriert.

Ohne diese Ablenkfunktion würde sich das FoV für die Einkoppelfläche $4_2$ und den Auskoppelbereich 5 durch die Größen der Flächen, deren Abstand sowie die Dezentrierung (entlang der zweiten Richtung) der Einkoppelfläche $4_2$ zum Auskoppelbereich 5 ergeben (gleiches würde für die Kombination der linken Einkoppelfläche $4_3$ und des Auskoppelbereiches gelten). Dieses FoV besitzt relativ zum zentralen FoV (gegeben durch die zentrale Einkoppelfläche $4_1$ und die Auskoppelfläche 5) einen Winkel-Offset. In der Summe ergibt sich ein vergrößertes FoV, das durch die Gesamtbreite der beiden Einkoppelflächen gegeben ist.

Durch Integration der beschriebenen Ablenkfunktion in die beiden seitlichen Einkoppelflächen $4_2$ und $4_3$ kann der beschriebene Winkel-Offset kompensiert werden. Das dezentrierte Einkoppelvolumenhologramm $4_2$, $4_3$ deckt dann in Kombination mit dem Auskoppelvolumenhologramm 5 das gleiche FoV wie das zentrale Einkoppelvolumenhologramm $4_1$ ab. Allerdings propagiert die vom dezentrierten Einkoppelvolumenhologramm $4_2$, $4_3$ ausgehende Strahlung in horizontaler Richtung im Wellenleiter dann mit einem horizontalen Winkel-Offset und wird mit diesem aus dem Wellenleiter 1 ausgekoppelt. Somit liegt das gleiche FoV nach Auskopplung nebeneinander vor. Unter Verwendung eines Detektorsystems 2 mit ausreichend großem FoV können diese nebeneinanderliegenden identischen FoV aufgenommen werden. Somit erhöht sich die detektierte Strahlungsleistung für das horizontale FoV, allerdings nicht die für das Signal-Rausch-Verhältnis relevante Leistungsdichte.

Um dies zu erreichen, ist die Auskoppelfläche 5 mit Hilfe von Volumenhologrammen derart ausgestaltet, dass diese die vom zentralen Einkoppelvolumenhologramm $4_1$ eingekoppelte Strahlung sowie die von den dezentrierten Einkoppelvolumenhologrammen $4_2$, $4_3$ eingekoppelte Strahlung in den gleichen Winkelbereich auskoppelt.

Dies wird dadurch erreicht, dass der Auskoppelbereich 5 unterschiedliche einbelichtete Auskoppelfunktionen aufweist. Dabei ist jede Auskoppelfunktion nur für die Strahlung des korrespondierenden Einkoppelvolumenhologramms $4_1$ - $4_3$ effizient (Winkelselektivität von Volumenhologramm), so dass letztendlich die aus unterschiedlichen Richtungen auf den Auskoppelbereich 5 propagierende Strahlung durch die entsprechende Auskoppelfunktion in den identischen Winkelbereich ausgekoppelt wird. Die Stärke der Winkelselektivität kann über die Dicke und die Brechzahlmodulation des volumenholographischen Materials und die Belichtungskonfiguration eingestellt werden.

Eine dieser Funktionen entspricht der ursprünglichen Auskoppelfunktion und sorgt lediglich für die vertikale Auskopplung der Strahlung. Alle anderen implementierten Funktionen weisen eine spezielle, angepasste Winkelselektivität auf, so dass diese nur für einen horizontalen Winkelbereich um den jeweiligen horizontalen Winkel-Offset effizient sind, die von der korrespondierenden dezentrierten Einkoppelfläche $4_2$, $4_3$ in Richtung der Auskoppelfläche 5 propagieren. Diese Auskoppelfunktion beinhaltet zusätzlich zur vertikalen Auskoppelfunktion eine Kompensation des horizontalen Winkel-Offsets, so dass das von den dezentrierten Einkoppelflächen $4_2$, $4_3$ erzeugte FoV mit dem von der zentrierten Einkoppelfläche $4_1$ erzeugten FoV überlagert wird. Infolgedessen kommt es zur Erhöhung der Leistungsdichte innerhalb des FoV und somit zur Verbesserung des Signal-Rausch-Verhältnisses.

Das hier beschriebene Verfahren kann im optischen Sinne auch als Pupillenreduktion bezeichnet werden (vgl. zu Pupillenreplikation oder Pupillenexpansion bei der Bildgebung = umgekehrter Lichtweg). Auf diese Weise kann im Einkoppelbereich 4 Leistung auf einer großen Fläche gesammelt und über eine kleine Fläche im Auskoppelbereich 5 ausgekoppelt werden.

Damit ist es möglich, einen Einkoppelbereich 4 mit einer sehr geringen Effizienz und somit hoher Transmission zu realisieren. Es wird somit eine lichtstarke Aufnahme von Bildinformationen über eine Einkoppelfläche 4 mit höchstmöglicher Transmission ermöglicht.

Andererseits kann der Einkoppelbereich beispielsweise auch mit einer gerade noch akzeptablen Transmission, d.h. mit einer hohen Einkoppeleffizienz, realisiert werden, um möglichst viel Strahlungsleistung auf einen nur sehr kleinen Auskoppelbereich zu konzentrieren. Am Auskoppelbereich könnte dann beispielsweise eine sehr kleine Solarzelle zur Umwandlung der Strahlungsenergie in elektrische Energie angebracht werden. Es ist auch möglich, dass die Auskopplung auf ein Detektorarray erfolgt.

Die Implementierung unterschiedlicher Auskoppelfunktionen ist mit ausreichend dickem volumenholographischen Material mit ausreichend hoher Brechzahlmodifikation möglich. Diese Implementierung unterschiedlicher Funktionen in nur einer holographischen Fläche wird auch als Funktionsmultiplexing bezeichnet. Alternativ können die einzelnen Auskoppelfunktionen auch in mehreren übereinander gestapelten volumenholographischen Folien einbelichtet werden.

Zu berücksichtigen ist, dass damit ebenso wie in vertikaler Richtung auch in horizontaler Richtung eine winkelabhängige, spektrale Einkopplung einhergeht und es somit auch zu einem winkelabhängigen spektralen Verlauf in horizontaler Richtung kommt. Da jedoch aufgrund der spektralen Verteilung in vertikaler Richtung Spektralinformationen ohnehin verloren gehen, stellt dieser Farbverlauf keinen signifikanten Nachteil des Verfahrens dar.

Wie aus Fig. 22 hervorgeht, ist die Effizienzsteigerung bei vertikaler Unterteilung des Einkoppelbereiches 4 bei gleichbleibender Breite des Einkoppelbereiches jedoch mit einer Verkleinerung des horizontalen FoV verbunden. Dieser Nachteil kann durch eine Kombination mit der Variante gemäß Fig. 16 bis 18 kompensiert werden, wodurch sich jedoch eine Verkleinerung des vertikalen FoV ergibt.

Wird hingegen eine horizontale Unterteilung der Einkoppelfläche von Fig. 21 gemäß Fig. 16 durchgeführt, kann das ursprüngliche FoV von nur einem Einkoppelvolumenhologramm (Fig. 21) vergrößert werden. Bei gleichbleibender Einkoppelvolumenhologrammfläche wird hierbei jedoch in Summe keine Steigerung der eingekoppelten Strahlungsleistung erreicht. Wird die Fläche eines jeden Einkoppelvolumenhologramms jedoch vergrößert, kann eine Effizienz des Systems mit Hilfe des oben beschriebenen Vorgehens verbessert werden.

Prinzipiell können die Einkoppelvolumenhologramme frei auf dem Wellenleiter 1 verteilt werden. Dann muss die Auswirkung auf das jeweilige FoV in Bezug auf das Einkoppelvolumenhologramm sowie eine entsprechend angepasste Korrektur ausgekoppelter Winkelbereiche berücksichtigt werden.

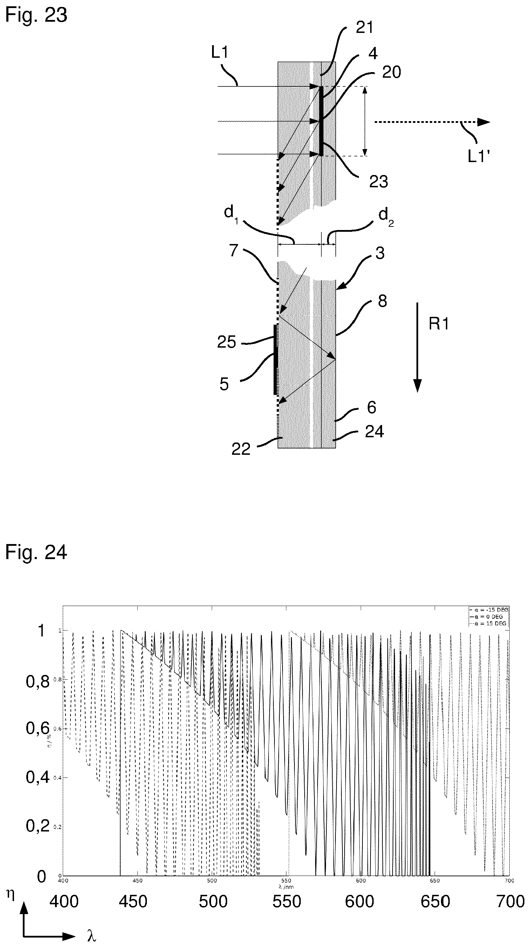

In Fig. 23 ist ein Ausführungsbeispiel gezeigt, bei dem sowohl im Einkoppelbereich 4 als auch im Auskoppelbereich 5 ein Relief-Gitter ausgebildet ist. Die Regeln zur Festlegung der Gitterperiode sind im Wesentlichen die gleichen wie bei einem Volumenhologramm. Es ist ein Beugungswinkel gefordert, für welche die Totalreflexion im Wellenleiter 1 gewährleistet ist. Des Weiteren werden in vorteilhafter Weise symmetrische Gitter für Ein- und Auskopplung verwendet. Ferner kann optional, sofern dies gewünscht ist, eine abbildende Funktion auf das Einkoppelgitter und/oder das Auskoppelgitter aufgebracht werden. Damit können auch Objekte, die z. B. nur 50 cm vom Wellenleiter 1 beabstandet sind, scharf abgebildet werden.

Der Vorteil der Ausbildung der Ein- und Auskoppelgitter als Reliefstrukturen gegenüber Volumenhologrammen besteht in der geringeren Winkel- und Wellenlängenselektivität. Wie bereits beschrieben ist bei der Verwendung von Volumenhologrammen ein Beobachtungswinkel mit einem eingeschränkten Wellenlängenbereich verknüpft. Ohne Ausführung entsprechend Fig. 11 führen Lücken im beleuchtenden Spektrum zu toten vertikalen Beobachtungswinkeln. Durch die höhere Wellenlängen- und Winkelakzeptanz von Reliefstrukturen können diese Ausfälle verhindert werden.

Das Einkoppelgitter 20 kann z. B. mittels eines Epoxidharzes oder eines UV-härtenden Polymers auf die rechte Oberfläche 21 der linken Platte 22 mit der Dicke $d_1$ in Fig. 23 abgeformt werden. Typische Polymere weisen dabei Brechzahlen n von ungefähr 1,5 auf.

Das Einkoppelgitter 20 wird anschließend mittels einer dünnen hochbrechenden dielektrischen Schicht 23 beschichtet. Typische Brechzahlen hierfür sind n > 2,0. Als Dicke für die Schicht 23 können z. B. Werte zwischen 10 und 100 nm verwendet werden. Es ist dabei insbesondere vorteilhaft nicht nur das Einkoppelgitter 20, sondern die ganze linke Platte 22 mit der dünnen hochbrechenden Schicht 23 zu beschichten, um einen gleichmäßigen Transmissionseindruck über die ganze Fläche zu erreichen.

Anschließend wird die zweite Platte 24 (mit einer Dicke $d_2$) mit einem Epoxidharz oder einem UV-härtenden Polymer auf das Einkoppelgitter 20 sowie die zugehörige Platte 22 mit der Dicke $d_1$ geklebt. Das Einkoppel-Reliefgitter 20 ist somit im Substrat, das durch die beiden Platten 22 und 24 gebildet ist, vergraben und wirkt durch seine dünne, hochbrechende Schicht als Reflexionsgitter 20 mit Beugungswirkungsgraden zwischen 5% und 20%.

Für das Auskoppelgitter 25 wird ein Gitter der gleichen Strichzahl (Gitterperiode) verwendet, welches jedoch auf die Außenoberfläche 7 der linken Platte 22 oder auf die Außenoberfläche 8 der zweiten Platte 24 abgeformt wird. Bei dem in Fig. 23 gezeigten Ausführungsbeispiel ist das Auskoppelgitter 25 auf die Vorderseite 7 abgeformt. Dieses Gitter 25 wird nach dem Abformen mit Aluminium bedampft, um eine hohe Auskoppeleffizienz zu erhalten. Hier sind Effizienzwerte von um die 50% über ein breites Wellenlängen- und Winkelspektrum erreichbar.

Der Wellenleiter 1 mit dem Einkoppelgitter 20 und dem Auskoppelgitter 25 besitzt zwei Blenden, da die Ränder des Einkoppelgitters 20 sowie die Ränder des Auskoppelgitters 25 jeweils als Blende wirken, welche den Strahlengang beschneiden. In der Darstellung gemäß Fig. 23 ist nur ein Strahlenbündel für genau eine Wellenlänge dargestellt. Andere vom gleichen Objektpunkt ausgehende Wellenlängen werden vom Einkoppelgitter 20 in andere Winkel im Wellenleiter 1 umgelenkt. Dieser Zusammenhang zwischen Wellenlänge und Ausbreitungswinkel im Wellenleiter 1 ist kontinuierlich, wenn auch nicht linear.

Somit gibt es bei langen Wellenleitern 1 mit vielen (z. B. 10, 20, etc.) Reflexionen die Möglichkeit, dass die Fläche des Einkoppelgitters 20 (im vertikalen Schnitt betrachtet) genau auf das Auskoppelgitter 25 fällt. Dann wird viel Licht übertragen. Es kann jedoch auch vorkommen, dass die Blende des Einkoppelgitters 20 gerade einmal unterhalb und einmal oberhalb des Auskoppelgitters 25 abgebildet wird, so dass kein Licht im Auskoppelgitter 25 ausgekoppelt wird.

Das übertragene Spektrum wird dadurch in effiziente und ineffiziente Bereiche aufgeteilt, die sich fast periodisch abwechseln. Ein solches, rein geometrisch bedingtes Übertragungsspektrum ist in Fig. 24 dargestellt, wobei entlang der x-Achse die Wellenlänge in nm und entlang der y-Achse die Übertragungseffizienz zwischen 0 (keine Übertragung des auf das Einkoppelgitter 20 fallenden Lichtes) und 1 (das gesamte auf das Einkoppelgitter 20 fallende Licht wird unter Vernachlässigung der Gitterbeugungseffizienz über das Auskoppelgitter 25 ausgekoppelt) aufgetragen ist. Diese Übertragungseffizienz ist für einen Einfallswinkel von - 15°, der den Wellenlängenbereich von 400 bis 530 nm abdeckt (gestrichelte Linie), für einen Einfallswinkel von 0°, der einen Wellenlängenbereich von 440 bis 645 nm abdeckt (durchgezogene Linie), und für einen Einfallswinkel von + 15°, der einen Wellenlängenbereich von 555 nm bis 690 nm abdeckt (gepunktete Linie), dargestellt. Die spektralen Begrenzungen ergeben sich dabei zum einen aus der Bedingung für Totalreflexion und zum anderen aus dem Ablenkwinkel nach der Einkopplung, unter dem das Auskoppelgitter gerade noch (ohne interne Totalreflexion an Ausflächen) getroffen wird. Daraus ist ersichtlich, dass das übertragene Spektralintervall sich mit dem Einfallswinkel verschiebt. Das übertragene Spektralintervall wird mit steigender Brechzahl des Wellenleiters 1 größer.

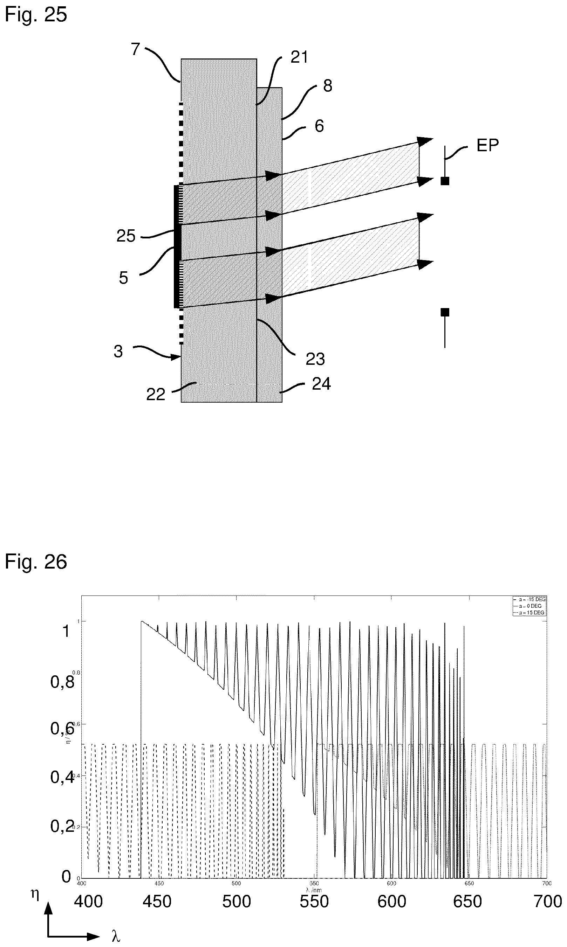

In Fig. 25 ist schematisch die durch die Eintrittspupille EP des Detektorsystems 2 verursachte Vignettierung dargestellt. Somit kann ein Teil der ausgekoppelten Strahlen nicht auf den Detektor 11 treffen, was zu einem geometrisch bedingten Übertragungsspektrum führt, wie es in Fig. 26 schematisch dargestellt ist. Die Darstellung in Fig. 26 entspricht der Darstellung in Fig. 24. Wie zu erwarten ist, führt diese Vignettierung zu schlechteren Übertragungsspektren für die Einfallswinkel - 15° und + 15°.

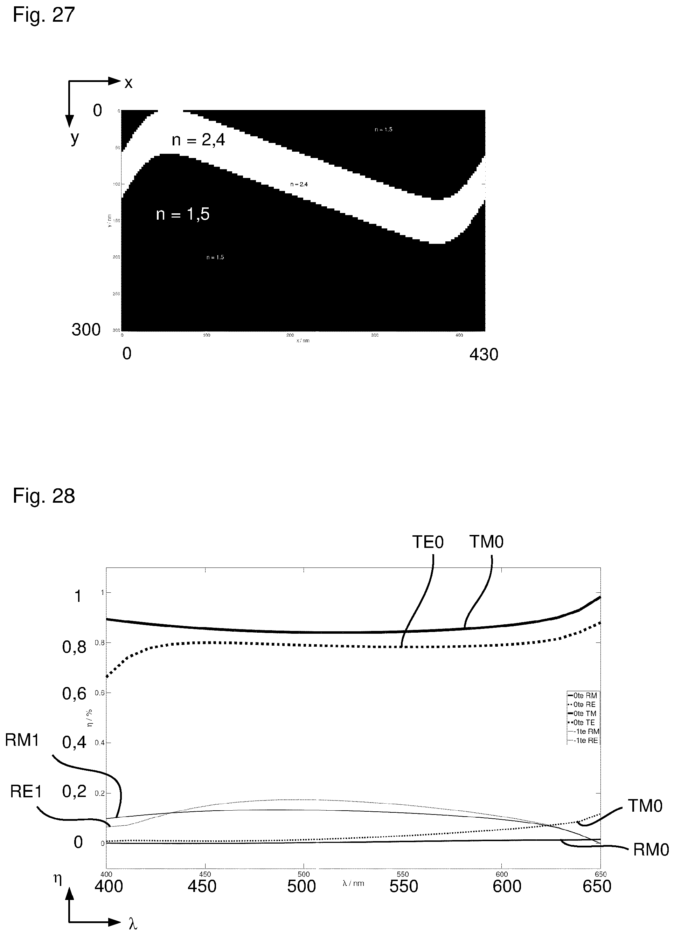

Das Einkoppelgitter 20 kann als Sägezahngitter ausgestaltet sein, d. h. die Profilform jeder Gitterperiode folgt zumindest näherungsweise einer Sägezahnform. Fig. 27 zeigt einen simulierten Querschnitt durch eine Gitterperiode des vergrabenen Einkoppelgitters, wobei für das Gitter eine leichte Profilverrundung angenommen wurde. Entlang der x-Achse ist die laterale Ausdehnung von 0 bis 430 nm aufgetragen und entlang der y-Achse ist der Profilschnitt im Bereich von 0 bis 300 nm aufgetragen, so dass sich eine Schichtdicke von etwa 60 nm bei einer Blazetiefe von ca. 120 nm ergibt. Mittels einer solchen Struktur ist es möglich, einen weiten Wellenlängenbereich mit ca. 10 bis 15% Effizienz in den Wellenleiter 1 einzukoppeln. Die sich dabei ergebende Beugungseffizienz (Reflexionsgrad) ist in Fig. 28 für den Wellenlängenbereich von 400 bis 650 nm (der entlang der x-Achse aufgetragen ist) aufgetragen. Die Kurven RE0 und RM0 zeigen den Reflexionsgrad für die Reflexion nullter Ordnung für das s-polarisierte Feld (RE) und das p-polarisierte Feld (RM) Die Kurven RM1 und RE1 zeigen den Reflexionsgrad für die minus erste Beugungsordnung für das das s-polarisierte Feld (RE) und das p-polarisierte Feld (RM).

Für das Auskoppelgitter 25 kann eine ähnliche Profilform wie in Fig. 27 verwendet werden. Dort wird jedoch anstelle des hochbrechenden Dielektrikums eine Metallbeschichtung genutzt.

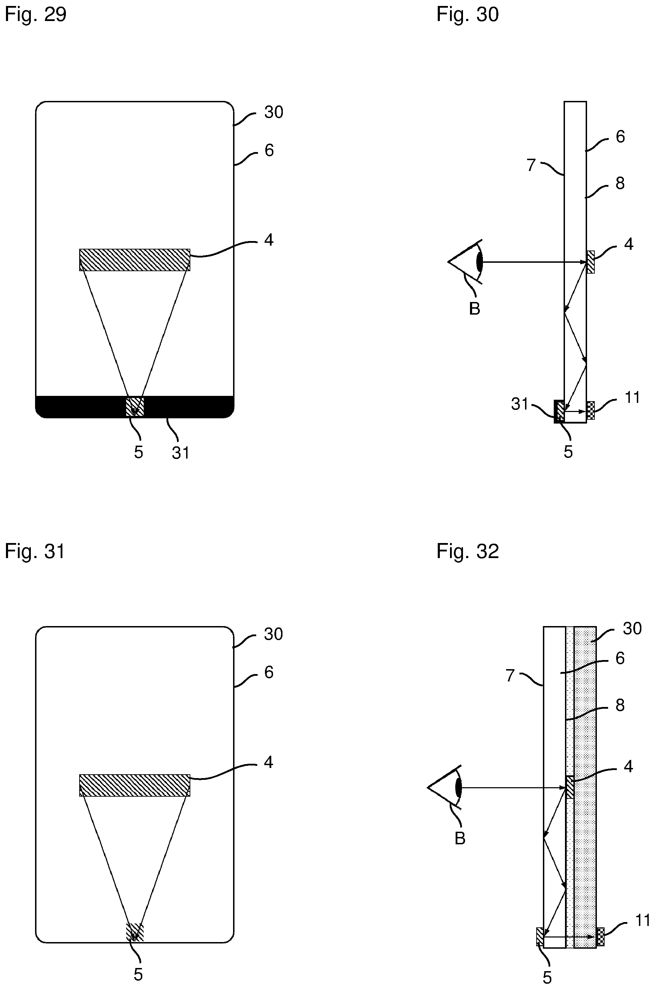

In Fig. 29 und 30 ist ein Ausführungsbeispiel gezeigt, bei dem der Wellenleiter 1 in einer Anzeige bzw. einem Display 30 integriert ist. Das Display 30 kann ein Display eines mobilen Consumer-Gerätes (wie z. B. eines Mobiltelefons oder eines Laptops) sein. Es kann auch ein Display eines stationären Computers sein.

Wie in den Darstellungen von Fig. 29 und 30 ersichtlich ist, ist auf der Rückseite 8 der Einkoppelbereich 4 mit dem reflektiven Volumenhologramm ausgebildet, das eine Strahlumlenkung so bewirkt, dass die umgelenkten Strahlen innerhalb des Displays durch z. B. interne Totalreflexion geführt werden, bis sie auf den Auskoppelbereich 5 mit dem Auskoppelvolumenhologramm treffen, das eine Umlenkung in Richtung zum Kamerasensor 11 bewirkt. Das so aufgenommene Bild ist quasi eine frontale Ansicht des Benutzers B, der gerade auf den Einkoppelbereich 4 blickt. Das Bild entspricht also einer Aufnahme mit einem Kamerasensor, der im Bereich des Einkoppelbereiches 4 positioniert ist. Man kann daher die Lösung gemäß Fig. 29 und 30 als transparenten Bildsensor bezeichnen, der in das Display integriert ist, ohne die Anzeigefunktion des Displays zu beeinträchtigen. Es können damit Aufnahmen von Bildern oder Bildsequenzen im Ort des Displays 30 durchgeführt werden und es wird damit eine frontale Ansicht der abzubildenden Szene realisiert.

Diese Eigenschaft kann z. B. für Anwendungen wie die Video-Telefonie oder die Aufnahme von Selbstportraits (sogenannte Selfies) in vorteilhafter Weise genutzt werden, da die Blickrichtung des Nutzers B hin zum Display mit der Mitte des von der Kamera aufgenommenen Bildes zusammenfällt. Damit können z. B. bei der Video-Telefonie beide Gesprächspartner quasi Augenkontakt halten, was bisher nicht möglich war, da die entsprechenden Kameras stets am Rand des Displays verbaut waren. Dieser Augenkontakt führt zu einem natürlicheren und immersiveren Gesprächserlebnis. Bei der Selbstportraitierung kann der Nutzer z. B. die Live-Vorschau des aufzunehmenden Bildes verfolgen, ohne seinen Blick von der Kamera ab und dem Display zuwenden zu müssen.

Zusätzlich zu der umlenkenden Funktion kann z. B. das Auskoppelgitter 5 eine abbildende Funktion aufweisen, so dass keine zusätzliche Optik vor dem Kamerasensor 11 mehr nötig ist. Damit kann der Integrationsgrad der Kamera in das Display 30 maximiert werden.

Aufgrund der für Volumenhologramme typischen, ausgeprägten Wellenlängen- und Winkelselektivität der Beugungseffizienz und der Möglichkeit, die Beugungseffizienz maßgeschneidert einzustellen, erscheint der vom Einkoppelgitter bedeckte Teil des Displays 30 größtenteils transparent und die auf dem Display angezeigten Inhalte bleiben für den Betrachter sichtbar. Dazu muss die Effizienz des Einkoppelgitters 4 einerseits groß genug sein, um den Kamerasensor 11 die Bilderfassung zu ermöglichen. Andererseits muss die Effizienz des Einkoppelgitters so niedrig sein, dass die Transparenz erhalten bleibt und keine für den Betrachter störenden Effekte auftreten. Die resultierende Transparenz des aufgebrachten Volumenhologramms im Einkoppelbereich hängt somit auch von der Lichtempfindlichkeit des verwendeten Kamerasensors 11 ab.

Im einfachsten Aufbau des Einkoppelbereiches 4 und des Auskoppelbereiches 5 gemäß der Ausführungsform von Fig. 1 bis 3 wird für jeden Winkel ein anderer Wellenlängenbereich auf den Detektor 11 bzw. Kamerasensor 11 übertragen, so dass ein Bild mit vertikalem Farbverlauf entsteht. Dieses Bild kann anschließend in ein monochromes Bild umgewandelt werden. Um z. B. ein natürliches mehrfarbiges Bild zu erhalten, kann das monochrome Bild mit Bildinformationen, die von einer weiteren Frontkamera aufgenommen werden, in Echtzeit nachkoloriert werden. Auf diese Weise kann ein natürliches Bild über die volumenholographisch implementierte Kamerafunktion mit dem genannten Vorteil der frontalen Ansicht zur Verfügung gestellt werden.

Alternativ kann die Farbfunktionalität der volumenholographisch implementierten Kamerafunktion gemäß des Ausführungsbeispiels von Fig. 10 bis 15 realisiert werden. Damit würde die Notwendigkeit einer zusätzlichen Frontkamera und des Nachkolorierens entfallen.

Bei dem in Fig. 29 und 30 gezeigten Ausführungsbeispiel wurde davon ausgegangen, dass der Auskoppelbereich 5 sowie der Kamerasensor 11 unter einem nicht-anzeigenden Bereich 31 des Displays 30 liegen, da andernfalls auch das vom Display abgegebene Licht auf den Kamerasensor 11 fallen würde. Dies würde die Aufnahme des Bildes stören.

Wird jedoch ein Display 30 eingesetzt, das bei Inaktivität transparent ist, kann der Kamerasensor auch unterhalb des eigentlich vom Display verwendeten Bereiches angeordnet werden, wie bei dem Ausführungsbeispiel gemäß Fig. 31 und 32 dargestellt ist.

Bei Aufnahme eines Bildes wird dann der betreffende Bereich des Displays 30 dunkelgeschaltet, so dass nur das vom Auskoppelbereich 5 kommende Licht auf den Kamerasensor 11 fällt. Auf diese Weise kann das Display 30 vollständig zur Anzeige verwendet werden, wenn die Kamerafunktion nicht aktiviert ist. Ist die Kamerafunktion aktiviert, so wird nur ein Teil des Displays 30 abgedunkelt. Die Displayfläche wird also nur bei Bedarf eingeschränkt und das auch nur in der Nähe des Randes.

Bei einer Vielzahl von Anwendungen kann ein erheblicher Mehrwert generiert werden, wenn in den Strahlenkanälen eines optischen Systems zusätzlich Strahlung eingebracht und/oder Strahlung detektiert werden kann, ohne die eigentliche optische Funktionalität des optischen Systems wesentlich zu beeinflussen. Bei Strahlungsdetektion wird Strahlung an einer geeigneten Stelle aus dem Strahlengang ausgespiegelt und auf einen Sensor gelenkt. Beim Einbringen von Strahlung in das System wird der entgegengesetzte Lichtweg verwendet und zusätzliche Strahlungsanteile eingebracht. Das kann beispielsweise zur Beleuchtung des Objektraums oder zum Einbringen zusätzlicher Informationen verwendet werden.

In bekannter Weise kommen zu diesem Zweck teilverspiegelte Substrate 40 zum Einsatz, wie in Fig. 33 schematisch dargestellt ist, wobei für das optische System schematisch zwei Linsen 41 und 42 eingezeichnet sind. Dies ist das sogenannte Combiner-Prinzip. Allerdings ist hierfür ausreichend Bauraum im optischen System erforderlich, der durch die Größe des verkippten Substrates 40 bzw. dem projizierten Strahldurchmesser am Ort der Ein- bzw. Ausspiegelung gegeben ist. Des Weiteren ist das Einbringen als auch die Detektion von Strahlung am selben Ort des Strahlengangs nur mit hohem Aufwand (spezielle Beschichtungen, komplexe Optiken zur Strahlungsüberlagerung) möglich.

Auch in diesem Fall kann der bereits beschriebene Wellenleiter 1 genutzt werden, der das Einbringen und/oder die Detektion von Strahlung bei geringen Bauraumanforderungen ermöglicht, wie schematisch in Fig. 34 dargestellt ist.

Zusätzlich zur Strahlungseinbringung und -detektion bietet der Ansatz auch die Möglichkeit, durch Filterung, gezielt Einfluss auf die spektralen Eigenschaften der ein- oder ausgespielten Strahlung zu nehmen. Infolge der hohen Transparenz des Wellenleiters 1 können diese multifunktionalen Komponenten an nahezu jedem Ort eines optischen Systems (falls erforderlich auch auf der optischen Achse) eingesetzt werden. Des Weiteren ermöglichen die speziellen physikalischen Eigenschaften von Volumenhologrammen die Implementierung dieser Funktionen an nahezu derselben Position.

Unter den genannten optischen Systemen werden technische optische Systeme aber auch transparente Oberflächen, wie z. B. Fenster, Autoscheiben, etc. verstanden. In den meisten Fällen stellt die Ein- oder Ausspiegelung von Informationen über ein verkipptes, teilverspiegeltes Substrat keine akzeptable Lösung dar. Das Prinzip des beschriebenen Wellenleiters 1 ermöglicht jedoch, diese Funktionalitäten direkt im transparenten Substrat (Fenster, Autoscheiben, etc.) selbst zu implementieren, ohne die Durchsicht, d. h. den ursprünglichen Strahlengang, wesentlich zu beeinflussen. Infolgedessen ergeben sich völlig neuartige Anwendungsfälle für Oberflächen, die im Normalfall z. B. lediglich den Schutz von Personen oder Gegenständen vor Umwelteinflüssen wie Wind, Temperatur, Partikel oder Strahlung dienen.

So kann das beschriebene Prinzip des Wellenleiters 1 auch zur Beleuchtung und/oder Projektion dienen. Dazu wird der Lichtweg im Wellenleiter 1 in der entgegengesetzten Richtung genutzt und anstelle des Detektors wird eine statische oder dynamische Lichtquelle (oder eine entsprechend leuchtende Bildquelle) eingesetzt. Somit wird der bisherige Auskoppelbereich der Einkoppelbereich 4 und wird der bisherige Einkoppelbereich zum Auskoppelbereich 5, wie in Fig. 35, 36 und 37 gezeigt ist. Die Strahlung der Lichtquelle 32 wird durch den Einkoppelbereich 4 in den Wellenleiter 1 eingekoppelt und in diesem bis zum Auskoppelbereich 5 geführt, über den dann die Auskopplung in den Raum oder ein entsprechend nachgeordnetes optisches System erfolgt.

Aus physikalischer Sicht bestehen zwischen Projektion und Beleuchtung keine grundsätzlichen Unterschiede, da in beiden Fällen in der Regel Strahlung in einer vorgegebenen Form (Winkel- und/oder Ortsverteilung) im Raum oder in einem Strahlengang bereitgestellt wird. Die Beleuchtung eines Objektes ist schematisch in Fig. 38 dargestellt. Fig. 39 zeigt schematisch die Projektion eines virtuellen Bildes für einen Betrachter B. In Fig. 40 ist schematisch die Projektion eines reellen Bildes (hier der Buchstabe F) gezeigt. Die Projektion eines reellen Bildes ist der Beleuchtung identisch.

Da der Einkoppelbereich 4 und der Auskoppelbereich 5 mit Volumenhologrammen realisiert werden kann (bevorzugt reflektive Volumenhologramme), können aufgrund der hohen Winkel- und Wellenlängenselektivität der Volumenhologramme nahezu transparente Lichtquellen bzw. nahezu transparente Projektionsvorrichtungen realisiert werden. Dabei kann eine hohe Transfereffizienz von der Einkopplung bis zur Auskopplung, die Erzeugung einer definierten Abstrahlcharakteristik (d. h. Winkel- oder Ortsverteilung) sowie gewünschte spektrale Zusammensetzungen realisiert werden.

Für das Detektionssystem kann die Ausdehnung der Ein- und Auskoppelfläche 4,5 in horizontaler Richtung an das geforderte FoV angepasst werden. In vertikaler Richtung (bzw. in der ersten Richtung) ist die Größe der Flächen durch die Größe der Apertur des Detektionssystems gegeben. Um ein ausgedehntes FoV zu erreichen, ist bevorzugt eine in horizontaler Richtung (bzw. in der zweiten Richtung) größere Ausdehnung der Einkoppelfläche 4 als die Ausdehnung der Auskoppelfläche 5 vzu wählen. Es entsteht ein Einkoppelstreifen.

Für ein Projektionssystem ist eine 2D-Pupillenreplikation bevorzugt, um die Bildinformation oder Beleuchtung über eine ausgedehnte Fläche (Eyebox) zur Verfügung zu stellen. Dabei wird die Pupille, die in das Substrat eingekoppelt wird, in horizontaler und vertikaler Richtung repliziert. Die Auskoppelfläche ist somit eine Fläche, deren Ausdehnung sich in horizontaler und vertikaler Richtung von der Ausdehnung der Einkoppelfläche unterscheidet (was ein Unterschied zum oben beschriebenen Detektionssystem ist).

Bei Verbindung des Detektions- und Projektionssystems befinden sich im sichtbaren Bereich des Wellenleiters somit der Einkoppelbereich der Detektion mit den oben beschriebenen Ausdehnungen und der Auskoppelbereich der Projektion mit den oben beschriebenen Ausdehnungen.

Natürlich können auch bei dem Wellenleiter 1 für die Projektion und/oder Beleuchtung optische Abbildungsfunktionen dem Einkoppel- und/oder dem Auskoppelbereich 4, 5 zugewiesen werden. Somit können wiederum Endlich-Unendlich-, Unendlich-Endlich-, Endlich-Endlich- oder Unendlich-Unendlich-Konfigurationen des Wellenleiters 1 realisiert werden. Damit kann bei der Ein- und/oder Auskopplung gezielter Einfluss auf die Strahlungsausbreitung sowie die Winkelverteilung und/oder Verteilung in einem definierten Ort genommen werden. Zusätzlich zu oder anstelle von optischen Abbildungsfunktionen in Form von z. B. Linsen- und/oder Hohlspiegelfunktionen können in die Einkoppel- und/oder Auskoppelflächen auch Diffusor- oder Strahltransformationsfunktionen eingebracht werden, wodurch ebenfalls gezielt Einfluss auf die Ausbreitung der Strahlung genommen werden kann.

Wie bei der Detektionskonfiguration hat auch bei der Beleuchtungs- / Projektionskonfiguration die effektive Größe in der Ein- und in der Auskoppelfläche 4, 5 einen erheblichen Einfluss auf den vom funktionalisierten Wellenleiter 1 transportierten, akzeptierten bzw. emittierten Winkelbereich.

Als Lichtquelle 32 können LED, Laser, etc. und als Bildquellen können Displays (z. B. DMD-Displays, LCD-Displays, etc.) verwendet werden. Durch den Einsatz dynamischer Lichtquellen oder dynamischer Bildquellen können zeitlich variable Winkel- oder Ortsverteilungen erzeugt werden. Damit können anpassbare Beleuchtungslösungen beispielsweise in Mikroskopen realisiert oder auch variable Informationen (virtuelle oder reelle Bildinhalte) in Strahlengänge eingebracht werden.

Alternativ zur wellenleiterbasierten Lösung können Beleuchtungs- und/oder Projektionsfunktionen mit hoher Transparenz in einem großen Winkel- und Längenbereich bei normaler Durchsicht auch in einen Freistrahlaufbau auf Basis von Reflexions-Volumenhologrammen gemäß Fig. 41A, 41B und 41C oder auf Basis von Transmissions-Volumenhologrammen gemäß Fig. 42A, 42B und 42C realisiert werden.

Wie bereits mehrfach dargelegt wurde, zeigen Volumenhologramme eine winkelabhängige spektrale Empfindlichkeit. Infolge dieser Eigenschaft wird unter einem bestimmten Winkel noch Strahlung innerhalb eines definierten Wellenlängenbereiches effizient abgelenkt und beispielsweise in den Wellenleiter 1 eingekoppelt. Während dieser Effekt für allgemeine Detektions- und Beleuchtungsanwendungen eher nachteilig ist, kann dieser auch vorteilhaft beispielsweise für spektrale Detektions- oder Beleuchtungsanwendungen genutzt werden.

Im Bereich der Beleuchtung kann dieses Verhalten vom Volumenhologramm eingesetzt werden, um bei gerichtet einfallender Strahlung einen definierten Spektralbereich herauszufiltern. So können beispielsweise schmalbandige Lichtquellen mit partieller Kohärenz, die im Gegensatz zu Lasern insbesondere für die holographische Projektion von virtuellen oder reellen Bildinhalten geeignet sind, realisiert werden. Bei konvergenter oder divergenter Strahlung ist es möglich, mit entsprechend aufgenommenen Volumenhologrammen über die am Volumenhologramm anliegende Winkelverteilung das vom Volumenhologramm abgelenkte Wellenlängenspektrum zu beeinflussen.

Auch für Detektionsanwendungen kann die winkelabhängige spektrale Empfindlichkeit vom Volumenhologramm ausgenutzt werden. Entsprechend der simulierten, einfallswinkel- und spektralabhängigen Effizienz gemäß Fig. 4 wird für jeden Einfallswinkel ein anderer Spektralbereich effizient abgelenkt und beispielsweise vertikal in einen Wellenleiter 1 eingekoppelt. Im einfachsten Aufbau der Kamera, wie in Fig. 1 bis 3 gezeigt ist, wird ein dem Einkoppelvolumenhologramm 4 korrespondierendes Auskoppelvolumenhologramm 5 verwendet, welches für die Auskopplung der im Wellenleiter 1 propagierenden Winkel sorgt, wobei jeder Winkel durch die Filterung oder Einkopplung aus einem definierten Spektralbereich besteht. Die Winkelverteilung wird anschließend durch eine Abbildungsfunktion im Auskoppelvolumenhologramm 5 oder durch ein Objektiv in eine Ortsverteilung auf den Detektor 11 überführt, wobei jeder Ort in vertikaler Richtung dann einen definierten Spektralbereich entspricht. Durch einen Winkelscan in vertikaler Richtung und einer synchronen Detektion der Intensität auf dem Detektor 11 können winkelabhängige Spektralinformationen parallelisiert in horizontaler Richtung ermittelt werden.

Ein solches System kann beispielsweise an der Unterseite eines Flugzeugs angebracht werden. Durch Kenntnis des Detektionssystems 2, der Fluggeschwindigkeit und der Position des Flugzeuges können spektrale Informationen über das überflogene Gebiet ermittelt werden, wobei die Daten horizontal parallelisiert aufgenommen werden.

Bei den bisher beschriebenen Ausführungsbeispielen wurden Möglichkeiten zur Funktionalisierung transparenter Oberflächen vorgestellt, wobei eine hohe Transparenz dieser Oberflächen in einem großen Winke- und Wellenlängenbereich bei normaler Durchsicht erhalten bleiben kann.

Dabei wird die Strahlung im transparenten Bereich mit speziellen Volumenhologrammen 4 im Falle der Detektion in den Wellenleiter 1 und im Falle der Beleuchtung/Projektion aus dem Wellenleiter 1 ausgekoppelt. Die Propagation zwischen dieser transparenten Detektions- bzw. Emissionsfläche erfolgt auf Basis von Totalreflexion innerhalb des Substrates bzw. des Wellenleiters. Es ist jedoch auch eine Reflexion aufgrund einer geeigneten reflektierenden Beschichtung möglich. Die Optikelektronik (Detektoren und Steuerungsquellen) können dann an einer design- oder funktionsseitig vorteilhaften Position eingebracht werden. Somit ist die Position der Strahlungsdetektion bzw. Strahlungsemission nicht mehr an die Position der Optoelektronik gebunden.

Die hohe Transparenz der beschriebenen, volumenholographisch eingebrachten Funktionen erlaubt, diese nahezu am selben Ort zu realisieren, da sich die Funktionen bei geeigneter Auslegung der Volumenhologramme nicht oder nur geringfügig gegenseitig beeinflussen.

Praktisch kann dies z. B. realisiert werden, indem die Volumenhologramme, in die die einzelnen Funktionen implementiert sind, übereinander (als Stack) angebracht werden. Alternativ können (bei ausreichend großer maximaler Brechzahlmodifikation des volumenholographischen Materials) auch mehrere optische Funktionen in ein Volumenhologramm einbelichtet werden. Die Transparenz des funktionalisierten Wellenleiters 1 bleibt bei geeigneter Auslegung der Volumenhologramme 4, 5 dabei erhalten. In Kombination mit dem wellenleiterbasierten Strahlentransport und der damit einhergehenden kleinen Bauform, können zum einen hochfunktionalisierte, transparente Oberflächen wie z. B. Fenster realisiert werden. Zum anderen erlaubt der Ansatz, optische Systeme durch einen verhältnismäßig kleinen Eingriff in den Strahlengang in ihrer Funktionalität erheblich zu erweitern.

Fig. 43D zeigt ein Beispiel für die Funktionalisierung eines Fensters 40, in dem die Beleuchtungsfunktion (Fig. 43A), die Detektionsfunktion (Fig. 43B) und die Projektionsfunktion (Fig. 43C) volumenholographisch eingebracht und der Strahlungstransport wellenleiterbasiert realisiert wird. Die unterschiedlichen Volumenhologramme für den Einkoppelbereich und den Auskoppelbereich sind durch den Index unterschieden: $4_1$, $4_2$, etc., $5_1$, $5_2$, etc.

Alternativ können einzelne Funktionen auch nicht-wellenleiterbasiert (d. h. durch Freistrahlpropagationsansätze) umgesetzt werden.

In Fig. 44A ist dies für die Beleuchtung, in Fig. 44B ist dies für die Detektion und in Fig. 44C ist dies für die Projektion schematisch dargestellt. Allerdings geht bei diesen Ausführungsbeispielen der durch die Wellenleitung generierte Bauraumvorteil (zumindest zum Teil) wieder verloren.

Fig. 44A - 44C zeigen die beschriebenen Umsetzungen mit den jeweiligen Freistrahl-Konfigurationen mit Reflexions-Volumenhologrammen. In Fig. 44D, 44E und 44F ist dies zusammen mit Transmissions-Volumenhologrammen gezeigt. Alle nicht durch Freistrahlpropagation realisierten Funktionen sind in den Fig. 44A - 44F wellenleiterbasiert umgesetzt.

Die Erweiterung der Funktionalität eines optischen Systems ist in Fig. 45 am Beispiel der Beleuchtung und Detektion in einem Mikroskop 45 zum Zweck der Aufnahme einer Probenübersicht gezeigt. In diesem Fall wird Strahlung in einen Wellenleiter 1 eingekoppelt und zur volumenholographischen Auskoppelfläche 5 geleitet, die dann für die Auskopplung der Strahlung in den Projektraum (Probenträger 46) sorgt. Die von der Probe 47 zurückgestreute Strahlung wird anschließend von einem weiteren Volumenhologramm 4' wiederum in den Wellenleiter 1 eingekoppelt, der dann für den Strahlungstransport bis zum Detektor 11 sorgt.

Bei entsprechender Auslegung des Beleuchtungssystems des Mikroskops 45 kann das wellenleiterbasierte System 1 beispielsweise als Probenfinder im Strahlengang verbleiben, ohne den Durchlichtbeleuchtungsstrahlengang zu stören. Alternativ zur in Fig. 45 gezeigten Anordnung kann das wellenleiterbasierte Beleuchtungs- und Abbildungssystem (Wellenleiter 1) auch oberhalb der Probe 47 angebracht werden. In der Regel ist der Bauraum zwischen Objektiv 48 des Mikroskopes 45 und der Probe 47 bei Mikroskopen jedoch stark eingeschränkt.

In beiden Varianten wirkt sich die Eigenschaft, dass sich Beleuchtung und Detektion am gleichen Ort sowie an der optischen Achse des Mikroskops 45 befinden, positiv auf die Gesamtfunktionalität des Systems aus. Durch die senkrechte Beleuchtung der Probe 47 und die senkrechte Detektion der Strahlung kann eine verhältnismäßig hohe Effizienz (Leistung Detektion / Leistung Beleuchtung) erreicht werden. Zugleich wird eine Projektionsfunktion zur Verfügung gestellt. In konventionellen optischen Systemen kann dies nur mit hohem Aufwand und/oder viel Bauraum erreicht werden. Im Falle des funktionalisierten Fensters 40 bzw. des funktionalisierten Wellenleiters 1 wäre eine vergleichbare Eigenschaft nur mit transparenten Strahlungsquellen und Detektoren möglich.

Die beschriebenen Ausbildungen des Wellenleiters 1 können im Bereich von Fahrzeugen (beispielsweise PKWs, LKWs, Motorräder, etc.) eingesetzt werden.

Um die äußere Umgebung und den Innenraum von Fahrzeugen überwachen bzw. beobachten zu können, werden immer mehr optische Projektionssysteme wie beispielsweise Kameras sowohl im Interieur als auch im Exterieur verbaut. Im Zuge des Wandels von der reinen manuellen Steuerung des Fahrzeuges durch den Menschen über das assistierte bis hin zum autonomen Fahren ist davon auszugehen, dass zukünftig immer mehr und leistungsfähigere Detektoren im Auto zum Einsatz kommen werden, um eine umfängliche und sichere Sensorik zu gewährleisten. Diese dürfen jedoch insbesondere im Automotive-Bereich ästhetischen Ansprüchen nicht im Wege stehen. Im Idealfall ist die Sensorik für den Kunden bzw. den Betrachter des Autos nicht sichtbar.

Derzeit werden optische Detektionssysteme z. B. im nicht-transparenten Bereich wie beispielsweise der B-Säule integriert. Diese weist dann nur noch eine kleine Öffnung für das Objektiv auf. Um die Freiheit für das Design zu erhöhen und den Insassen eine bessere Sicht nach außen zu ermöglichen, werden zukünftig die nicht-transparenten Bereiche der Karosserie reduziert. In bestimmten Bereichen zwingend anzubringende Sensoren auf Basis konventioneller Ansätze können dann nicht mehr nahezu unsichtbar integriert werden. Dieses Phänomen zeigt sich bereits jetzt an den optischen System zur Straßenschild- und Spurerkennung, die notwendigerweise im oberen mittleren Bereich der Windschutzscheibe angebracht werden müssen, um korrekte Messdaten ermitteln zu können. Bei einem Einsatz klassischer optischer Systeme wird dadurch ein nicht-transparenter Bereich in der Windschutzscheibe geschaffen, der die Sicht des Fahrers einschränken kann und negative Auswirkung auf das Erscheinungsbild des Autos hat. Mit dem beschriebenen Wellenleiter können zukünftig alle Scheiben des Autos mit Detektorflächen ausgestattet werden, ohne die Transparenz wesentlich zu beeinträchtigen. Dabei kann die Strahlung vom in der Scheibe vorgesehenen Einkoppelbereich in die Scheibe eingekoppelt und durch Wellenleiter zum Detektor transportiert werden, der sich dann in einem nicht-transparenten Bereich des Autos befinden kann.

In Fig. 46A, 46B, 46C und 46D sind verschiedene Varianten der Verwirklichung des Wellenleiters 1 in der Windschutzscheibe 50 eines Kraftfahrzeuges 51 schematisch dargestellt. Der Einkoppelbereich 4 kann an der gewünschten Stelle in der Windschutzscheibe 50 positioniert werden, da er die Transparenz der Windschutzscheibe an dieser Stelle nicht wesentlich beeinflusst. Die über den Einkoppelbereich 4 eingekoppelte Strahlung wird dann durch Reflexionen in der Windschutzscheibe 50 bis zum Auskoppelbereich 5 geführt, der in einem Bereich positioniert sein kann, der nicht mehr zur Durchsicht dient. In diesem Bereich kann dann auch das (nicht gezeigte) Detektorsystem 2 positioniert sein.

Bei der Variante gemäß Fig. 46A ist der Auskoppelbereich 5 im Bereich des Autodaches. Bei der Variante gemäß Fig. 46B ist der Auskoppelbereich im Bereich der Motorhaube bzw. des Armaturenbretts. Natürlich ist auch eine Einkopplung zur Seite hin möglich, wie in Fig. 46C und 46D gezeigt, so dass dann der Auskoppelbereich 5 z. B. im Bereich der rechten (Fig. 46C) oder linken (Fig. 46D) A-Säule positioniert ist. Es kann somit die Windschutzscheibe 50 (oder auch jeder andere transparente Fläche) mit Hilfe (volumen-)holographischer Strukturen und/oder mikrooptischer Reliefstrukturen funktionalisiert werden, um die Transparenz dieser Fläche bei normaler Durchsicht in einem großen Wellen- und Winkelbereich nicht wesentlich zu beeinflussen. Durch die beschriebene Funktionsimplementierung wird die Strahlung aus der Umgebung oder aus dem Innenraum des Kraftfahrzeugs in die Windschutzscheibe 50 eingekoppelt. Diese dient dann als Wellenleiter und sorgt durch z. B. Totalreflexion für eine Propagation der Strahlung zum Auskoppelbereich, der die Strahlung dann auf das Detektorsystem 2 auskoppelt. Somit kann die im Wesentlichen transparente Oberfläche der Windschutzscheibe als Detektionsfläche verwendet werden, während der Detektor 11 an einer design- und/oder funktionsseitig vorteilhaften Position angebracht werden kann. Infolgedessen ist die Position der Strahlungsdetektion bzw. Strahlungsaufnahme nicht mehr an die Position des Detektors 11 gebunden. Dies ist insbesondere dann von Vorteil, wenn die Strahlungsdetektion zwingend an einem bestimmten Ort erfolgen muss, der jedoch gleichzeitig eine hohe Transparenz aufweisen soll.

Das in Verbindung mit Fig. 46A - 46D beschriebene Wellenleitersystem kann auch im umgekehrten Lichtweg zur Beleuchtung eines Objektraumes bzw. zu Projektionszwecken verwendet werden. In dieser Konfiguration wird die von einer statischen oder dynamischen Quelle (z. B. Lichtquelle und/oder Bildquelle) ausgehende Strahlung über den Auskoppelbereich, der jetzt als Einkoppelbereich dient und der sich im Nicht-Transparenzbereich des Fahrzeuges befindet, in den Wellenleiter, d. h. die Scheibe 50, eingekoppelt und mit Hilfe des Einkoppelbereiches 4, der jetzt als Auskoppelbereich dient und der sich im transparenten Bereich befindet, wieder ausgekoppelt.

Natürlich ist es auch möglich, die beschriebene Detektion sowie die beschriebene Projektion bzw. Beleuchtung zu kombinieren und dann den im transparenten Bereich der Windschutzscheibe angeordneten Einkoppel- und Auskoppelbereich nahe beieinander oder übereinander auszubilden, wie bereits beschrieben wurde. Eine optimierte Detektion kann für eine gezielte Anpassung der Beleuchtung an die Detektion, insbesondere spektral und winkelabhängig, erreicht werden.

Beim einfachsten Aufbau des Wellenleiters 1 (Unendlich-Unendlich-Konfiguration, aufgenommen bei einer Wellenlänge) ist zu berücksichtigen, dass in Faltungs-/Wellenleitungsrichtung in jedem Winkel nur ein bestimmtes Spektralband in den Wellenleiter eingekoppelt und letztendlich wieder ausgekoppelt wird. Werden Einkoppel- und Auskoppelbereich 4, 5 beispielsweise übereinander angeordnet, wie in Fig. 46A und 46B gezeigt ist, ergibt sich relativ zur Straße in vertikaler Richtung ein winkel- bzw. ortsabhängiger Farbverlauf. Bei Drehung der Anordnung um ± 90° (wie in Fig. 46C und 46D dargestellt ist), ist der Farbverlauf in horizontaler Richtung (also parallel zur Straße) gerichtet. Demnach ist die Ausrichtung des Einkoppel- zum Auskoppelbereich 4, 5 sorgfältig entsprechend der jeweiligen Aufgabenstellung zu wählen. Dabei ist auch die unterschiedliche Ausprägung des FoV der beiden senkrecht aufeinander stehenden Richtungen (gegeben durch das Größenverhältnis und den Abstand vom Einkoppelzum Auskoppelbereich 4, 5 und die spektrale Empfindlichkeit des Detektors) zu berücksichtigen.

Ferner sollte bei der Auslegung des Einkoppelbereiches die Neigung der jeweiligen Scheibe 50 und die zu erwartende Position des zu detektierenden Objektes betrachtet werden. So ist beispielsweise bei der Beobachtung des Fahrers mit Hilfe des in der Windschutzscheibe eingebrachten Einkoppelbereiches 4 eine Winkelverschiebung des vertikalen FoV in Form einer entsprechenden Ablenkfunktion einzubringen, damit die optische Achse in vertikaler Richtung in etwa mit dem Bereich des Gesichts des Fahrers übereinstimmt und nicht beispielsweise der Rumpf des Fahrers detektiert wird. Somit kann durch eine spezielle Auslegung des Einkoppelbereiches 4 eine Anpassung auf das zu erwartende Objekt und dessen Projektion durchgeführt werden. Der gleiche Zusammenhang ergibt sich für den Einsatz des Wellenleitersystems als Beleuchtung. Hier ist dann der Auskoppelbereich 5 auf die gewünschte Ausleuchtung des Objektraumes anzupassen.

Die in Verbindung mit Fig. 10 bis 15 beschriebene Ausbildung zur Bereitstellung einer RGB-Funktionalität ist bei der Sensorik im Automotive-Bereich vorteilhaft, um Detektionsausfälle in einzelnen Winkelbereichen durch das Fehlen spektraler Komponenten zu vermeiden. Auf diese Weise wird sichergestellt, dass in einem definierten Spektralbereich (idealerweise die spektrale Empfindlichkeit des Detektors) in jedem Winkel ein Signal detektiert werden kann. Ferner kann die Sicherheit gegenüber Detektionsausfällen infolge spektraler Unempfindlichkeit des Einkoppelbereiches 4 auch durch die Implementierung des Einkoppel- und Auskoppelbereiches 4, 5 mit Hilfe der beschriebenen Oberflächenreliefstrukturen erhöht werden.

Die in Verbindung mit Fig. 16 bis 20 beschriebene Variante des Wellenleiters zur Vergrößerung des horizontalen FoV, bei der das horizontale FoV durch Kodierung im vertikalen FoV erhöht wird, kann in vorteilhafter Weise im Automotive-Bereich eingesetzt werden, da hier häufig ein wesentlich größeres horizontales FoV als vertikales FoV erforderlich ist.

Die in Verbindung mit Fig. 21 und 22 beschriebene Variante zur Steigerung der Detektionseffizienz kann in vorteilhafter Weise im Automotive-Bereich eingesetzt werden, da für den Einkoppelbereich 4 große Flächen in Form der Scheiben zur Verfügung stehen. Damit kann möglichst viel Strahlleistung auf das Detektorsystem 2 geleitet werden und es ist auch eine Aufnahme von Bildinformationen bei schlechten Lichtbedingungen möglich.

Ferner besteht auch die Möglichkeit der Einkopplung von Strahlung außerhalb des visuellen Spektralbereiches, beispielsweise von Strahlung aus dem nahen Infrarot. Bei Verwendung eines entsprechend geeigneten Detektorsystems ist somit die Aufnahme von Bildinformationen unter für den Menschen schlechten Beleuchtungsbedingungen möglich.

Wie in Verbindung mit Fig. 33 bis 45 beschrieben wurde, können die funktionalisierten Wellenleiter 1 nicht nur zur Aufnahme von Strahlung, sondern auch für die Beleuchtung des Objektraumes oder für die Projektion funktionalisiert werden. Dafür wird im Vergleich zu den beschriebenen Detektionsanordnungen mittels des Wellenleiters 1 der entgegengesetzte Lichtweg verwendet. Auf diese Weise kann der Außen- und/oder Innenbereich des Fahrzeuges gezielt ausgeleuchtet werden, um auch bei schlechten Lichtverhältnissen eine zuverlässige Detektion zu gewährleisten. So können beispielsweise Detektionsausfälle in einzelnen Winkelbereichen, wie sie bei der einfachsten Ausführung des Wellenleiters 1 beim Fehlen einzelner Spektralbereiche auftreten können, vermieden werden. Die künstliche Beleuchtung und die winkelabhängige, spektrale Empfindlichkeit der Einkoppelfläche sind dabei aufeinander abzustimmen.

Bei Windschutzscheiben 50 und Heckscheiben von Kraftfahrzeugen besteht bereits heute ein besonders hoher Bedarf Detektionsflächen, die sich an definierten Orten befinden, möglichst transparent zu gestalten und die entsprechenden Detektoren bzw. Detektionssysteme 2 in nicht-transparente Bereiche innerhalb der Karosserie zu verlagern. Dies ermöglicht eine freie Sicht des Fahrers bei gleichzeitiger Integration optischer Sensoren für Fahrerassistenzsysteme, wodurch die Sicherheit im Straßenverkehr gesteigert werden kann. Neben der Detektion im Außenbereich ermöglicht die oben beschriebene Funktionalisierung auch die Aufnahme von Bildinformationen im Interieur des Fahrzeuges. Mit den so gewonnenen Bildsequenzen können in Kombination mit entsprechenden Datenverarbeitungen weitere Sicherheitssysteme wie z. B. eine Müdigkeitserkennung oder eine Gestensteuerung implementiert werden. Auch die Identifikation des Fahrers und/oder der Insassen ohne sichtbare Öffnung für eine Kamera ist auf diese Weise möglich

Ebenso wie in der Windschutzscheibe und der Heckscheibe können Auskoppelflächen und Detektoren auch bei feststehenden Seitenscheiben in einrahmenden Karosseriebereichen untergebracht werden. Auch hier kann die zusätzliche Funktionalisierung zur Aufnahme von Bildinformationen im Innen- und Außenbereich dienen, ohne die Transparenz der Oberfläche im Wesentlichen zu beeinflussen.

Es ist auch die Integration mehrerer Detektionssysteme in unterschiedliche Scheiben eines Fahrzeuges möglich. Auf diese Weise kann die Position wie bei einem 3-dimensionalen Koordinatensystem von Personen und Gegenständen im Raum bestimmt werden (Stichwort: Tomografie und somit Messung aus mehreren Perspektiven).

Die Anordnung der funktionalisierten Flächen und des Detektors können ebenso auf die Beleuchtungskonstruktion übertragen werden. Dabei befindet sich jedoch die Auskoppelfläche, d. h. die emittierende Fläche, im transparenten und die Einkoppelfläche inklusive Strahlungsquelle im nicht-transparenten Bereich.

Bei geeigneter Auslegung von Detektions- und/oder Beleuchtungssystem kann die Auskoppelfläche des Beleuchtungssystems mit der Einkoppelfläche des Detektionssystems zusammenfallen.

Im Vergleich zu feststehenden Scheiben ist die Anordnung der Auskoppelfläche bei verschiebbaren Scheiben bevorzugt so gewählt, dass sie in Bereichen liegt, die auch während oder nach dem Verfahren nicht innerhalb der Karosserie bzw. nicht innerhalb eines nicht-transparenten Bereiches befinden. Zudem muss das Detektionssystem fest mit der verfahrbaren Scheibe verbunden sein, um auch während oder nach dem Verfahren die Detektionsfunktion sicherzustellen. In Fig. 47A - 47C sind verschiedene Anordnungen des Einkoppel- und des Auskoppelbereichs am Beispiel einer verfahrbaren Seitenscheibe dargestellt.

**Patentansprüche**

**1.** Funktionalisierte Scheibe für ein Fahrzeug,

wobei die Scheibe (1) einen transparenten Basiskörper (6) mit einer Vorderseite (7) und einer Rückseite (8) aufweist,

wobei der Basiskörper (6) einen teiltransparenten Einkoppelbereich (4) und einen davon in einer ersten Richtung (R1) beabstandeten Auskoppelbereich (5) aufweist,

wobei der Einkoppelbereich (4) eine diffraktive Struktur umfasst, die von einem zu detektierenden Objekt kommende und auf die Vorderseite (7) treffende Strahlung nur einen Teil so umlenkt, dass der umgelenkte Teil als eingekoppelte Strahlung im Basiskörper (6) durch Reflexionen bis zum Auskoppelbereich (5) propagiert und auf den Auskoppelbereich (5) trifft,

wobei der Auskoppelbereich (5) von der auf ihn treffenden eingekoppelten Strahlung mindestens einen Teil so umlenkt, dass der umgelenkte Teil aus dem Basiskörper (6) über die Vorderseite (7) oder Rückseite (8) austritt, um auf ein Detektorsystem (2) zu treffen, **dadurch gekennzeichnet, dass**

die Breite des Einkoppelbereiches (4) in einer zweiten Richtung (R2) quer zur ersten Richtung (R1) größer ist als die Breite des Auskoppelbereiches (5) in der zweiten Richtung (R2).

2. Scheibe nach Anspruch 1, wobei der Auskoppelbereich entlang der ersten Richtung näher an einem Rand des Basiskörpers (6) angeordnet ist als der Einkoppelbereich (4).

3. Scheibe nach einem der obigen Ansprüche, wobei die diffraktive Struktur des Einkoppelbereiches (4) als reflektives Volumenhologramm, als transmissives Volumenhologramm oder als Reliefgitter ausgebildet ist.

4. Scheibe nach einem der obigen Ansprüche, wobei der Auskoppelbereich (5) ein reflektives Volumenhologramm, ein transmissives Volumenhologramm, eine Spiegelfläche, ein Prisma, ein reflektives Reliefgitter, ein transmissives Reliefgitter, eine reflektive Fresnel-Struktur oder eine transmissive Fresnel-Struktur aufweist.

5. Scheibe nach einem der obigen Ansprüche, wobei der Einkoppelbereich (4) und/oder der Auskoppelbereich (5) zusätzlich zur Strahlumlenkung noch eine abbildende optische Funktion aufweist.

6. Scheibe nach einem der obigen Ansprüche, wobei die diffraktive Struktur von der vom zu detektierenden Objekt kommenden und auf die Vorderseite (7) treffenden Strahlung einen Teil so transmittiert, dass er über die Rückseite (8) aus dem Basiskörper austritt.

7. Scheibe nach einem der obigen Ansprüche, wobei der Einkoppelbereich (4) mehrere diffraktive Einkoppelstrukturen aufweist, die in der ersten Richtung benachbart sind und sich dadurch unterscheiden, dass sie unterschiedliche horizontale Sichtfelder in einer Ebene, die durch ein Lot auf die Vorderseite und einer zweiten Richtung quer zur ersten Richtung aufgespannt ist, aufweisen, so dass sie Strahlung aus den unterschiedlichen horizontalen Sichtfeldern zum Auskoppelbereich (5) hin umlenken, und

die diffraktiven Einkoppelstrukturen so ausgebildet sind, dass sie die Strahlung aus den unterschiedlichen horizontalen Sichtfeldern bei der Umlenkung durch unterschiedliche umgelenkte Wellenlängen codiert, so dass die Auskopplung und/oder Detektion selektiv für die verschiedenen horizontalen Sichtfeldern möglich ist.

8. Scheibe nach einem der Ansprüche 1 bis 6, wobei der Einkoppelbereich (4) entlang der zweiten Richtung mindestens zwei unterschiedliche diffraktive Einkoppelstrukturen aufweist, die Strahlung aus dem gleichen Sichtfeld umlenken und sich darin unterscheiden, dass sie eine unterschiedliche Umlenkungskomponente in der zweiten Richtung aufweisen,

wobei die Umlenkungskomponente in der zweiten Richtung für jede der diffraktiven Einkoppelstrukturen, die entlang der zweiten Richtung zum Auskoppelbereich (5) versetzt ist, so gewählt ist, dass der vorliegende Versatz für die eingekoppelte Strahlung kompensiert wird und die eingekoppelte Strahlung somit auf den Auskoppelbereich trifft, und wobei der Auskoppelbereich (5) so ausgebildet ist, dass er die von den unterschiedlichen diffraktiven Einkoppelstrukturen eingekoppelte Strahlung in den gleichen Winkelbereich umlenkt.

9. Scheibe nach einem der obigen Ansprüche,

wobei der Basiskörper (6) einen weiteren Einkoppelbereich und einen davon in der ersten Richtung (R1) beabstandeten weiteren Auskoppelbereich aufweist,

wobei der weitere Einkoppelbereich von der von einer Licht- oder Bildquelle kommenden und auf den weiteren Einkoppelbereich (5) treffenden Strahlung mindestens einen Teil so umlenkt, dass der umgelenkte Teil als eingekoppelte weitere Strahlung im Basiskörper (6) durch Reflexionen bis zum weiteren Auskoppelbereich propagiert und auf den weiteren Auskoppelbereich (4) trifft,

wobei der weitere Auskoppelbereich (5) eine diffraktive Struktur umfasst, die von der auf sie treffenden eingekoppelten weiteren Strahlung mindestens einen Teil so umlenkt, dass der umgelenkte Teil aus dem Basiskörper (6) über die Vorderseite (7) oder Rückseite (8) austritt, um die gewünschte Beleuchtung und/oder Projektion zu bewirken.

10. Scheibe nach Anspruch 9, bei der

die eingekoppelte Strahlung und die eingekoppelte weitere Strahlung mindestens abschnittsweise im selben Bereich im Basiskörper (6) in entgegengesetzter Richtung propagieren und/oder bei der
der Einkoppelbereich und der weitere Auskoppelbereich mindestens zum Teil im selben Bereich im Basiskörper (6) ausgebildet sind.

11. Scheibe nach einem der obigen Ansprüche, wobei der Einkoppelbereich (4) für die von dem zu detektierenden Objekt kommende und auf die Vorderseite (7) treffende Strahlung eine Transmission von mindestens 50% aufweist.

12. Detektorsystem mit einer funktionalisierten Scheibe nach einem der obigen Ansprüche, wobei das Detektorsystem einen Detektor aufweist, auf den der vom Auskoppelbereich umgelenkte Teil der Strahlung trifft, wobei der Detektor bevorzugt als digitaler Bildsensor ausgebildet ist.

13. Detektorsystem nach Anspruch 12, bei dem der Detektor (11) mit der Vorder- oder Rückseite (7, 8) des Basiskörpers (6) verbunden ist,
und wobei bevorzugt zwischen dem Detektor (11) und der Vorder- bzw. Rückseite (7, 8) kein separates abbildendes optisches Element angeordnet ist.

14. Detektorsystem nach Anspruch 12, wobei zwischen dem Basiskörper (6) und dem Detektor (6) mindestens ein optisch abbildendes Element angeordnet ist.

15. Detektorsystem nach einem der Ansprüche 12 bis 14, weiter mit
einer Licht-/ oder Bildquelle und/oder bei dem mehrere funktionalisierte Scheiben nach einem der Ansprüche 1 bis 11 vorgesehen sind.

**Claims**

1. Functionalized windowpane for a vehicle,

wherein the windowpane (1) comprises a transparent base body (6) having a front side (7) and a rear side (8),
wherein the base body (6) comprises a semitransparent coupling area (4) and a decoupling area (5) spaced apart therefrom in a first direction (R1),

wherein the coupling area (4) comprises a diffractive structure which deflects only a part of radiation coming from an object to be detected and incident on the front side (7) so that the deflected part propagates as coupled-in radiation in the base body (6) by reflections up to the decoupling area (5) and is incident on the decoupling area (5),
wherein the decoupling area (5) deflects at least a part of the coupled-in radiation incident thereon so that the deflected part exits from the base body (6) via the front side (7) or rear side (8) in order to strike a detector system (2),
**characterized in that**
the width of the coupling area (4) in a second direction (R2) transverse to the first direction (R1) is greater than the width of the decoupling area (5) in the second direction (R2).

2. Windowpane according to Claim 1, wherein the decoupling area is arranged along the first direction closer to an edge of the base body (6) than the coupling area (4).

3. Windowpane according to either one of the preceding claims, wherein the diffractive structure of the coupling area (4) is formed as a reflective volume hologram, as a transmissive volume hologram, or as a relief grating.

4. Windowpane according to any one of the preceding claims, wherein the decoupling area (5) comprises a reflective volume hologram, a transmissive volume hologram, a mirror surface, a prism, a reflective relief grating, a transmissive relief grating, a reflective Fresnel structure, or a transmissive Fresnel structure.

5. Windowpane according to any one of the preceding claims, wherein the coupling area (4) and/or the decoupling area (5) also has an imaging optical function in addition to the beam deflection.

6. Windowpane according to any one of the preceding claims, wherein the diffractive structure transmits a part of the radiation coming from the object to be detected and incident on the front side (7) so that it exits from the base body via the rear side (8).

7. Windowpane according to any one of the preceding claims, wherein the coupling area (4) comprises multiple diffractive coupling structures, which are adjacent in the first direction and differ in that they have different horizontal fields of view in a plane spanned by a perpendicular on the front side and a second direction transverse to the first direction, so that they deflect radiation from the different horizontal fields of view towards the decoupling area (5), and

the diffractive coupling structures are designed so that they code the radiation from the different horizontal fields of view upon the deflection by way of different deflected wavelengths so that the decoupling and/or detection is selectively possible for the various horizontal fields of view.

8.  Windowpane according to any one of Claims 1 to 6, wherein the coupling area (4) comprises at least two different diffractive coupling structures along the second direction, which deflect radiation from the same field of view and differ in that they have a different deflection component in the second direction,

    wherein the deflection component in the second direction is selected for each of the diffractive coupling structures, which are offset along the second direction towards the decoupling area (5), so that the existing offset for the coupled-in radiation is compensated and the coupled-in radiation is therefore incident on the decoupling area, and
    wherein the decoupling area (5) is designed so that it deflects the radiation coupled in by the different diffractive coupling structures in the same angle range.

9.  Windowpane according to any one of the preceding claims,

    wherein the base body (6) comprises a further coupling area and a further decoupling area spaced apart therefrom in the first direction (R1), wherein the further coupling area deflects at least a part of the radiation coming from a light source or image source and incident on the further coupling area (5) so that the deflected part propagates as coupled-in further radiation in the base body (6) by reflections up to the further decoupling area and is incident on the further decoupling area (4),
    wherein the further decoupling area (5) comprises a diffractive structure, which deflects at least a part of the coupled-in further radiation incident thereon so that the deflected part exits from the base body (6) via the front side (7) or rear side (8) in order to cause the desired illumination and/or projection.

10. Windowpane according to Claim 9, in which

    the coupled-in radiation and the coupled-in further radiation propagate in opposite directions at least in some sections in the same area in the base body (6) and/or in which
    the coupling area and the further decoupling area are formed at least in part in the same area in the base body (6).

11. Windowpane according to any one of the preceding claims, wherein the coupling area (4) has a transmission of at least 50% for the radiation coming from the object to be detected and incident on the front side (7).

12. Detector system having a functionalized windowpane according to any one of the preceding claims, wherein the detector system comprises a detector, on which the part of the radiation deflected by the decoupling area is incident, wherein the detector is preferably designed as a digital image sensor.

13. Detector system according to Claim 12, in which the detector (11) is connected to the front or rear side (7, 8) of the base body (6),
    and wherein preferably no separate imaging optical element is arranged between the detector (11) and the front or rear side (7, 8).

14. Detector system according to Claim 12, wherein at least one optically imaging element is arranged between the base body (6) and the detector (6).

15. Detector system according to any one of Claims 12 to 14, furthermore comprising
    a light source or image source and/or in which multiple functionalized windowpanes according to any one of Claims 1 to 11 are provided.

**Revendications**

1.  Vitre fonctionnalisée pour véhicule,

    la vitre (1) comprenant un corps de base transparent (6) présentant une face avant (7) et une face arrière (8),
    le corps de base (6) présentant une zone d'injection (4) partiellement transparente et une zone d'extraction (5) à distance de cette dernière dans une première direction (R1),
    la zone d'injection (4) comprenant une structure diffractante qui dévie seulement une partie d'un rayonnement provenant d'un objet à détecter et incident sur la face avant (7), de telle sorte que la partie déviée se propage, en tant que rayonnement injecté, dans le corps de base (6) par réflexions jusqu'à la zone d'extraction (5) et soit incidente sur la zone d'extraction (5),
    la zone d'extraction (5) déviant au moins une partie du rayonnement injecté qui est incidente sur celle-ci, de telle sorte que la partie déviée sorte du corps de base (6) par la face avant (7) ou la face arrière (8) pour être incidente sur un système de détection (2), **caractérisée en ce**

**que**

la largeur de la zone d'injection (4) dans une deuxième direction (R2) transversale à la première direction (R1) est supérieure à la largeur de la zone d'extraction (5) dans la deuxième direction (R2).

2. Vitre selon la revendication 1, dans laquelle la zone d'extraction est disposée plus près d'un bord du corps de base (6) que la zone d'injection (4) le long de la première direction.

3. Vitre selon l'une des revendications précédentes, dans laquelle la structure diffractante de la zone d'injection (4) est réalisée sous la forme d'un hologramme de volume réfléchissant, d'un hologramme de volume transmissif ou d'un réseau à relief.

4. Vitre selon l'une des revendications précédentes, dans laquelle la zone d'extraction (5) est un hologramme de volume réfléchissant, un hologramme de volume transmissif, une surface de miroir, un prisme, un réseau à relief réfléchissant, un réseau à relief transmissif, une structure de Fresnel réfléchissante ou une structure de Fresnel transmissive.

5. Vitre selon l'une des revendications précédentes, dans laquelle la zone d'injection (4) et/ou la zone d'extraction (5) présente en plus de la déviation de faisceau une fonction optique d'imagerie,

6. Vitre selon l'une des revendications précédentes, dans laquelle la structure diffractante transmet une partie du rayonnement provenant de l'objet à détecter et incident sur la face avant (7), de telle sorte qu'il sort du corps de base par la face arrière (8).

7. Vitre selon l'une des revendications précédentes, la zone d'injection (4) présentant plusieurs structures d'injection diffractantes qui sont adjacentes dans la première direction et qui diffèrent en ce qu'elles présentent des champs de vision horizontaux différents dans un plan défini par une perpendiculaire à la face avant et une deuxième direction transversale à la première direction, de sorte qu'elles dévient le rayonnement provenant des différents champs de vision horizontaux vers la zone d'extraction (5), et les structures d'injection diffractantes étant conçues de telle sorte qu'elles codent le rayonnement provenant des différents champs de vision horizontaux, lors de la déviation, par différentes longueurs d'onde déviées, de sorte que l'extraction et/ou la détection soient possibles sélectivement pour les différents champs de vision horizontaux.

8. Vitre selon l'une des revendications 1 à 6, la zone d'injection (4) présentant, le long de la deuxième direction, au moins deux structures d'injection diffractantes différentes, qui dévient le rayonnement provenant du même champ de vision et qui diffèrent en ce qu'elles présentent une composante de déviation différente dans la deuxième direction, la composante de déviation dans la deuxième direction, pour chacune des structures d'injection diffractantes qui est décalée le long de la deuxième direction par rapport à la zone d'extraction (5), étant choisie de telle sorte que le décalage présent soit compensé pour le rayonnement injecté et que le rayonnement injecté soit ainsi incident sur la zone d'extraction, et la zone d'extraction (5) étant conçue de telle sorte qu'elle dévie le rayonnement injecté par les différentes structures d'injection diffractantes dans la même plage angulaire.

9. Vitre selon l'une des revendications précédentes,

le corps de base (6) présentant une zone d'injection supplémentaire et une zone d'extraction supplémentaire à distance de cette dernière dans la première direction (R1), la zone d'injection supplémentaire déviant au moins une partie du rayonnement provenant d'une source de lumière ou d'image et incident sur la zone d'injection supplémentaire (5), de telle sorte que la partie déviée se propage dans le corps de base (6) par réflexions, sous la forme d'un rayonnement supplémentaire injecté, jusqu'à la zone d'extraction supplémentaire et soit incidente sur la zone d'extraction supplémentaire (4), la zone d'extraction supplémentaire (5) comprenant une structure diffractante qui dévie au moins une partie du rayonnement supplémentaire injecté incident sur celle-ci, de telle sorte que la partie déviée sorte du corps de base (6) par la face avant (7) ou la face arrière (8) pour produire l'éclairage et/ou la projection souhaités.

10. Vitre selon la revendication 9, dans laquelle

le rayonnement injecté et le rayonnement injecté supplémentaire se propagent, au moins par sections, dans la même zone du corps de base (6) dans des directions opposées et/ou dans laquelle la zone d'injection et la zone d'extraction supplémentaire sont formées, au moins partiellement, dans la même zone du corps de base (6).

11. Vitre selon l'une des revendications précédentes, la zone d'injection (4) présentant une transmission d'au moins 50 % pour le rayonnement provenant de l'objet à détecter et incident sur la face avant (7).

12. Système de détection doté d'une vitre fonctionnalisée selon l'une des revendications précédentes, le système de détection présentant un détecteur sur lequel est incidente la partie du rayonnement déviée par la zone d'extraction, le détecteur étant de préférence réalisé sous la forme d'un capteur d'image numérique.

13. Système de détection selon la revendication 12, dans lequel le détecteur (11) est relié à la face avant ou arrière (7, 8) du corps de base (6), et dans lequel, de préférence, aucun élément optique d'imagerie séparé n'est disposé entre le détecteur (11) et la face avant ou respectivement la face arrière (7, 8).

14. Système de détection selon la revendication 12, dans lequel au moins un élément optique d'imagerie est agencé entre le corps de base (6) et le détecteur (6).

15. Système de détection selon l'une des revendications 12 à 14, comprenant en outre :
une source de lumière/ou d'image et/ou dans lequel sont prévues plusieurs vitres fonctionnalisées selon l'une des revendications 1 à 11.

EP 3 918 422 B1

Fig. 1

30

Fig. 2

Fig. 3

Fig. 4

Fig. 5

Fig. 6

Fig. 7A

Fig. 7B

Fig. 7C

Fig. 7D

Fig. 8A

Fig. 8B

Fig. 8C

Fig. 9A

Fig. 9B

Fig. 10

Fig. 11A

Fig. 11B

Fig. 11C

Fig. 11D

Fig. 11E

Fig. 11F

Fig. 12

Fig. 13A

Fig. 13B

Fig. 13C

Fig. 14A          Fig. 14C          Fig. 14E

   Fig. 14B          Fig. 14D          Fig. 14F

Fig. 15

Fig. 16

Fig. 17

Fig. 18A

$\gamma_0 - 2\gamma_1 \pm \gamma_1$

$\gamma_0 \pm \gamma_1$

$\gamma_{0+} 2\gamma_1 \pm \gamma_1$

$4_1$

$4_2$

$4_3$

8

7

6

Fig. 18B

$\gamma_0 - 2\gamma_1 \pm \gamma_1$

$\gamma_0 \pm \gamma_1$

$\gamma_{0+} 2\gamma_1 \pm \gamma_1$

$4_1$

$\beta_0 + 2\beta_1 \pm \beta_1$

$4_2$

$\beta_0 \pm \beta_1$

$4_3$

$\beta_0 - 2\beta_1 \pm \beta_1$

8

7

6

Fig. 19A     Fig. 19B      Fig. 19C

$4_1$

$4_2$

$4_3$

$\alpha$

$\lambda$

20

10

0

-10

-20

$\alpha$

0,42     0,5     0,58     0,64     0,7

$\lambda$

Fig. 20

Fig. 21

Fig. 22

Fig. 23

Fig. 24

Fig. 25

Fig. 26

Fig. 27

Fig. 28

EP 3 918 422 B1

Fig. 29

Fig. 30

Fig. 31

Fig. 32

46

Fig. 33

Fig. 34

Fig. 35

Fig. 36

Fig. 37

Fig. 38

Fig. 39

Fig. 40

Fig. 41A

Fig. 41B

Fig. 41C

Fig. 42A

Fig. 42B

Fig. 42C

Fig. 43A

Fig. 43B

Fig. 43C

Fig. 44A

Fig. 44B

Fig. 44C

Fig. 44D

Fig. 44E

Fig. 44F

Fig. 45

Fig. 46A

Fig. 46B

Fig. 46C

Fig. 46D

Fig. 47A

Fig. 47B

Fig. 47C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP H0712938 A
- WO 2016012813 A2

- JP H0668379 A